# EUROPEAN PATENT APPLICATION

(11) **EP 4 135 212 A1**
(43) Date of publication of application: **15.02.2023**
(21) Application number: 21785639.2
(22) Date of filing: 29.03.2021
(51) Int. Cl.: H04B 7/06, H04L 27/26, H04W 16/28, H04W 72/04

(54) **COMMUNICATION DEVICE, COMMUNICATION CONTROL METHOD, AND COMMUNICATION SYSTEM**

(30) Priority: 09.04.2020 JP 2020070664
(71) Applicant: Sony Group Corporation, Minato-Ku, Tokyo, 108-0075 (JP)
(72) Inventor: TAKANO, Hiroaki, Tokyo 108-0075 (JP)
(74) Representative: Witte, Weller & Partner Patentanwälte mbB
(86) International application number: PCT/JP2021/013171
(87) International publication number: WO 2021/205921

(57) **Abstract**

A communication device (200) includes a plurality of antenna panels (60) and a control unit (240). The antenna panel (60) includes one or more antennas (50), one or more transmission analog circuits (54) for signal transmission using the antennas (50), and one or more reception analog circuits (55) for signal reception using the antennas (50). When having received a notification including information regarding a reference signal of downlink from a second communication device (100), the control unit (240) performs antenna switching being an operation of switching a connection between the antenna (50) included in the antenna panel (60) that has received the reference signal and the transmission analog circuit (54).

## Description

### Field

The present disclosure relates to a communication device, a communication control method, and a communication system.

### Background

Various radio access schemes and radio networks in cellular mobile communications (hereinafter, "Long Term Evolution (LTE)", "LTE-Advanced (LTE-A)", "LTE-Advanced Pro (LTE-A Pro)", "Fifth Generation (5G)", "New Radio (NR)", "New Radio Access Technology (NRAT)", "Evolved Universal Terrestrial Radio Access (EUTRA)", or "Further EUTRA (FEUTRA)") are under examination in Third Generation Partnership Project (3GPP). In the following description, LTE includes LTE-A, LTE-A Pro, and EUTRA, and NR includes NRAT and FEUTRA. In LTE and NR, a base station device (base station) is also referred to as an evolved NodeB (eNodeB) in LTE and a gNodeB in NR, while a terminal device (mobile station, mobile station device, or terminal) is also referred to as user equipment (UE). LTE and NR are cellular communication systems that arranges a plurality of areas covered by the base station, as cellular areas. A single base station may manage a plurality of cells.

The NR assumes a configuration in which a terminal device equipped with a plurality of antennas incudes reception analog circuits as many as the number of antennas while including transmission analog circuits fewer than the number of antennas. From the viewpoint of channel reciprocity, it is desirable to enable transmission of measurement signals as many as the number of antennas in order to estimate downlink channel quality based on uplink channel quality. In this regard, Non Patent Literature 1 below discloses a technique of transmitting uplink measurement signals as many as the number of antennas while performing antenna switching.

### Citation List

### Non Patent Literature

Non Patent Literature 1: Sony, "Remaining issues on SRS", R1-1806564, 3GPP TSG RAN WG1 Meeting #93, May 2018 Summary

### Technical Problem

There may be a case where a terminal device having a plurality of antenna panels performs antenna switching. Here, the antenna panel includes a plurality of antennas, a plurality of reception processing units (for example, an analog circuits) using the antennas, and one or more transmission processing units (for example, an analog circuits) using the antennas. In a case where the terminal device includes a plurality of antenna panels with this configuration, a base station device has not been able to grasp with which antenna panel the terminal device performs antenna switching. This has made it difficult for the base station device to allocate a resource on which antenna switching is performed in consideration of the antenna panel used by the terminal device.

In this manner, the conventional technology has room for improvement in terms of effective use of resources.

Therefore, the present disclosure provides a mechanism capable of more effectively utilizing resources at the time of implementation of antenna switching.

### Solution to Problem

According to the present disclosure, a communication device is provided. The communication device includes a plurality of antenna panels and a control unit. The antenna panel includes one or more antennas, one or more transmission analog circuits for signal transmission using the antennas, and one or more reception analog circuits for signal reception using the antennas. When having received a notification including information regarding a reference signal of downlink from a second communication device, the control unit performs antenna switching being an operation of switching a connection between the antenna included in the antenna panel that has received the reference signal and the transmission analog circuit.

### Brief Description of Drawings

FIG. 1 is a diagram illustrating an example of an overall configuration of a system according to an embodiment of the present disclosure.
FIG. 2 is a diagram illustrating BWPs.
FIG. 3 is a diagram illustrating beam sweeping.
FIG. 4 is a sequence diagram illustrating an example of a flow of a typical beam selection procedure and a typical CSI acquisition procedure executed by a base station and a terminal device.
FIG. 5 is a sequence diagram illustrating another example of a flow of a typical beam selection procedure and a CSI acquisition procedure executed by a base station and a terminal device.
FIG. 6 is a diagram illustrating antenna switching.
FIG. 7 is a diagram illustrating an example of antenna switching.
FIG. 8 is a diagram illustrating an example of antenna switching.
FIG. 9 is a diagram illustrating an example of a relationship between antenna switching and time resources on which the antenna switching is performed.
FIG. 10 is a block diagram illustrating an example of a configuration of a base station according to the present embodiment.
FIG. 11 is a block diagram illustrating an example of a configuration of a terminal device according to the present embodiment.
FIG. 12 is a diagram illustrating an example of a configuration of a plurality of antenna panels included in the terminal device according to the present embodiment.
FIG. 13 is a diagram illustrating an arrangement example of SRS resources used for antenna switching in a plurality of antenna panels.
FIG. 14 is a diagram illustrating an arrangement example of SRS resources used for antenna switching in a plurality of antenna panels according to the embodiment of the present disclosure.
FIG. 15 is a diagram illustrating an arrangement example of SRS resources used for antenna switching in a plurality of antenna panels.
FIG. 16 is a diagram illustrating an arrangement example of SRS resources used for antenna switching in a plurality of antenna panels according to an embodiment of the present disclosure.
FIG. 17 is a diagram illustrating an arrangement example of SRS resources used for antenna switching in a plurality of antenna panels.
FIG. 18 is a diagram illustrating an arrangement example of SRS resources used for antenna switching in a plurality of antenna panels according to the embodiment of the present disclosure.
FIG. 19 is a diagram illustrating an arrangement example of SRS resources used for antenna switching in a plurality of antenna panels according to the embodiment of the present disclosure.
FIG. 20 is a diagram illustrating an arrangement example of SRS resources used for antenna switching in a plurality of antenna panels according to the embodiment of the present disclosure.
FIG. 21 is a table for explaining an example of information reported by the terminal device according to the embodiment of the present disclosure.
FIG. 22 is a table illustrating another example of information reported by the terminal device according to the embodiment of the present disclosure.
FIG. 23 is a diagram illustrating conventional Spatial Relation Info.
FIG. 24 is a diagram illustrating an SRS resource set according to the embodiment of the present disclosure.
FIG. 25 is a diagram illustrating the capability of transmission from the terminal device to the base station according to the embodiment of the present disclosure.
FIG. 26 is a sequence diagram illustrating a flow of communication processing according to the embodiment of the present disclosure.
FIG. 27 is a block diagram illustrating a first example of a schematic configuration of an eNB.
FIG. 28 is a block diagram illustrating a second example of the schematic configuration of the eNB.
FIG. 29 is a block diagram illustrating an example of a schematic configuration of a smartphone.
FIG. 30 is a block diagram illustrating an example of a schematic configuration of a car navigator.

### Description of Embodiments

Preferred embodiments of the present disclosure will be described in detail hereinbelow with reference to the accompanying drawings. Note that redundant descriptions will be omitted from the present specification and the drawings by assigning the same reference signs to components having substantially the same functional configuration.

Note that the description will be provided in the following order.
1. Introduction
   1.1. System configuration
   1.2. Related technology
   1.3. Overview of technical problems and proposed technology
2. Configuration examples
   2.1. Configuration example of base station
   2.2. Configuration example of terminal device
   2.3. Antenna panel
   2.4. TRP
3. Technical features
   3.1. Resource arrangement
   3.2. Relationship between resource and antenna panel
   3.3. Definition of antenna panels on which antenna switching is performed
   3.4. Capability of terminal device
4. Communication processing
5. Application examples
   5.1. Application examples related to base station
   5.2. Application examples related to terminal device
6. Summary

### <<1. Introduction>>

### <1.1. System configuration>

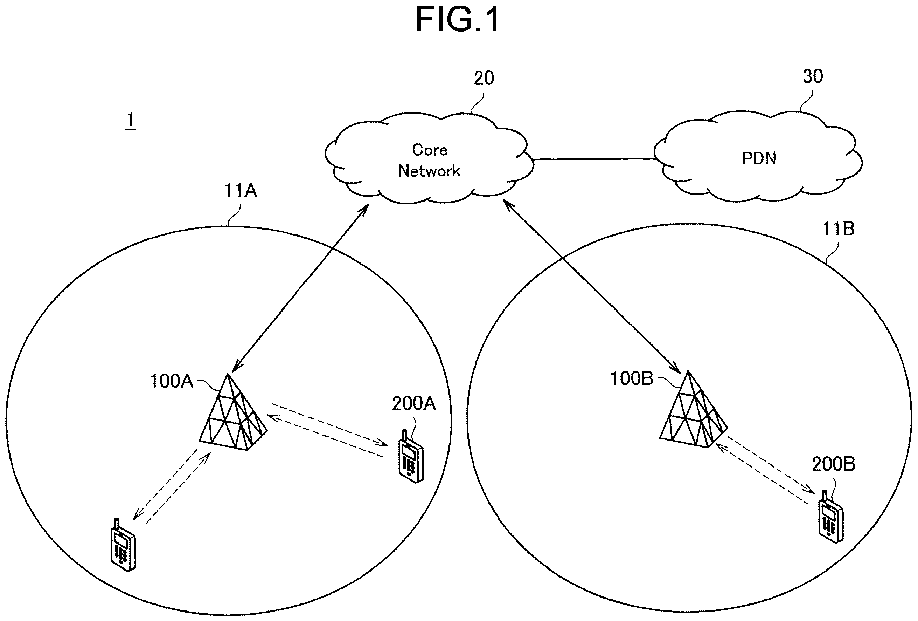

FIG. 1 is a diagram illustrating an example of an overall configuration of a system 1 according to an embodiment of the present disclosure. As illustrated in FIG. 1, the system 1 includes base stations 100 (100A and 100B), terminal devices 200 (200A and 200B), a core network 20, and a packet data network (PDN) 30.

The base station 100 is a communication device that operates cells 11 (11A and 11B) and provides a radio service to one or more terminal devices 200 located inside the cell 11. For example, the base station 100A provides a radio service to the terminal device 200A, while the base station 100B provides a radio service to the terminal device 200B. The cell 11 can be operated according to any radio communication scheme such as LTE or New Radio (NR). The base station 100 is connected to the core network 20. The core network 20 is connected to the PDN 30.

The core network 20 may include, for example, a Mobility Management Entity (MME), a Serving gateway (S-GW), a PDN gateway (P-GW), a Policy and Charging Rule Function (PCRF), and a Home Subscriber Server (HSS). The MME is a control node that handles signals of the control plane and manages a movement state of the terminal device 200. The S-GW is a control node that handles user plane signals, and is a gateway device that switches a transfer path of user data. The P-GW is a control node that handles user plane signals, and is a gateway device serving as a connection point between the core network 20 and the PDN 30. The PCRF is a control node that performs control related to a policy such as quality of service (QoS) and charging for a bearer. The HSS is a control node that handles subscriber data and performs service control.

The terminal device 200 is a communication device that performs radio communication with the base station 100 under the control of the base station 100. The terminal device 200 may be a device referred to as User Equipment (UE). For example, the terminal device 200 transmits an uplink signal to the base station 100, and receives a downlink signal from the base station 100.

### <1.2. Related technology>

### (1) Band Width Part (BWP)

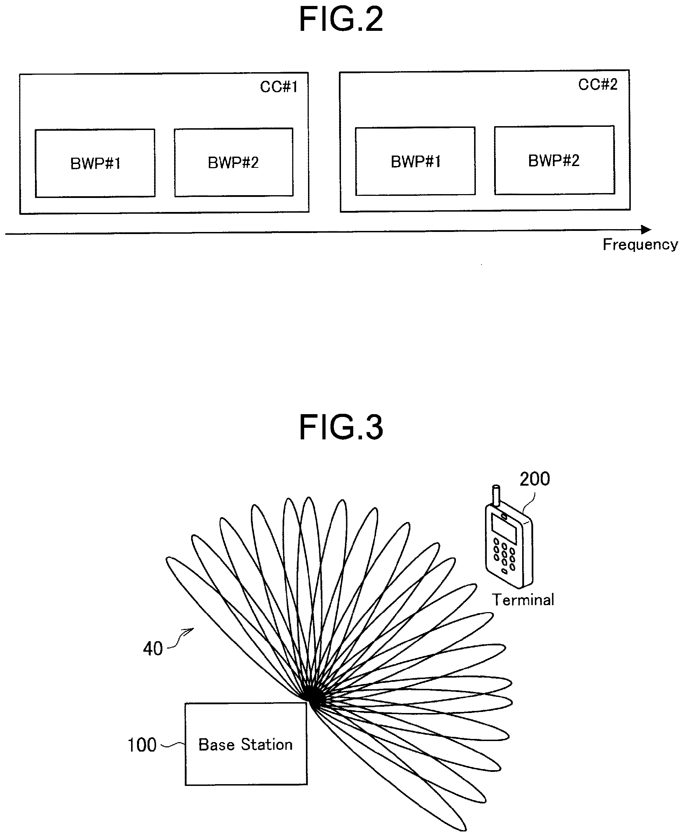

FIG. 2 is a diagram illustrating BWPs. As illustrated in FIG. 2, CC#1 includes a plurality of BWPs (#1 and #2), and CC#2 includes a plurality of BWPs (#1 and #2). In the present specification, a number following the symbol # represents an index.

The BWPs included in different CCs indicate different BWPs even with the same index. Here, CC, which represents a component carrier, is a frequency band, and the terminal device 200 can perform communication processing with a CC as one unit. With simultaneous execution of communication processing on a plurality of CCs by the terminal device 200, it is possible to achieve improvement in throughput.

The CC includes a plurality of frequency bands referred to as band width parts (BWPs). The BWP is obtained by dividing CC, which is one operation bandwidth, into a plurality of frequency bandwidths. In each BWP, it is possible to set mutually different subcarrier spacings.

The BWP has been standardized as the NR basic frame format in 3GPP Rel 15. In the OFDM modulation scheme standardized for LTE in Rel 8, the subcarrier spacing is fixed at 15 kHz. In contrast, in Rel 15, the subcarrier spacing can be set to 60 kHz, 120 kHz, or 240 kHz. With an increase in the subcarrier spacing, the OFDM symbol length is shortened accordingly. For example, since the subcarrier spacing is 15 kHz in LTE, one slot can be transmitted per 1 ms, in other words, 14 OFDM symbols can be transmitted. On the other hand, two slots can be transmitted in the NR when the subcarrier spacing is 60 kHz, four slots can be transmitted when the subcarrier spacing is 120 kHz, and eight slots can be transmitted when the subcarrier spacing is 240 kHz. In this manner, the OFDM symbol length is shortened by lengthening the subcarrier. Accordingly, it is possible to provide a frame configuration suitable for low-latency communication by this length.

NR can simultaneously provide BWPs in which different subcarrier spacings are set. This makes it possible for NR to simultaneously provide a plurality of BWPs corresponding to different use cases.

Note that 3GPP Rel 15 and Rel 16 define a system in which the terminal device 200 cannot simultaneously perform transmission and reception using a plurality of BWPs. Such a system can perform transmission and reception using a plurality of antenna panels described below. For example, when data transmitted from a plurality of base stations (TRP) is individually received by a plurality of antenna panels, the terminal device 200 does not simultaneously use a plurality of BWPs. However, the terminal device 200 can technically perform transmission and reception simultaneously using a plurality of BWPs, and there is a future possibility that transmission and reception will be simultaneously performed using a plurality of antenna panels. Note that details of the antenna panel and the TRP will be described below.

### (2) Codebook based beamforming

The base station 100 can improve communication quality, for example, by communicating with the terminal device 200 using beamforming. Methods of beamforming include a method of generating a beam that follows the terminal device 200 and a method of selecting a beam that follows the terminal device 200 from among candidate beams. Due to the requirement of a calculation cost every time of beam generation, the former method is unlikely to be adopted in a future radio communication system (for example, 5G). On the other hand, the latter method is already adopted in Full Dimension Multiple Input Multiple Output (FD-MIMO) in Third Generation Partnership Project (3GPP) Release 13. The latter method is also referred to as codebook based beamforming.

In codebook based forming, the base station 100 prepares (that is, generates) beams in all directions in advance. The base station 100 selects a beam suitable for the target terminal device 200 from among the beams prepared in advance, and communicates with the terminal device 200 using the selected beam. For example, when it is possible to perform communication at 360 degrees in the horizontal direction, the base station 100 prepares 360 types of beams in increments of 1 degree, for example. In a case where the beams half overlap each other, the base station 100 prepares 720 types of beams. In the vertical direction, the base station 100 prepares beams in 180 degrees, for example, from -90 degrees to +90 degrees.

Note that since the terminal device 200 only monitors the beam, and thus is not likely to need to have a knowledge of the presence of the codebook on the base station 100 side.

Hereinafter, a plurality of beams prepared in advance by the base station 100 is also referred to as a beam group. The beam group can be defined for each frequency band, for example. In addition, beam groups may be defined per Rx/Tx beam and per downlink/uplink.

### (3) Beam sweeping

In order to select an optimum beam to be used for communication in NR, there have been examinations on beam sweeping, a method of transmitting or receiving a measurement signal (known signal) using each of a plurality of beams belonging to a beam group. The measurement signal may also be referred to as a reference signal. An optimum transmission beam (hereinafter, also referred to as a Tx beam) can be selected based on the measurement result of the measurement signal transmitted with beam sweeping. An example of beam sweeping will be described with reference to FIG. 3. In the example illustrated in FIG. 3, the base station 100 transmits a measurement signal with beam sweeping (that is, while switching the Tx beam) using a beam group 40. Hereinafter, transmission with beam sweeping is also referred to as beam sweeping transmission. Subsequently, the terminal device 200 performs measurement with the measurement signal transmitted by beam sweeping transmission and then determines which Tx beam is to be received with the highest feasibility. In this manner, the optimal Tx beam of the base station 100 is selected. Note that the base station 100 can select the optimal Tx beam of the terminal device 200 by switching the base station 100 and the terminal device 200 and executing a similar procedure.

On the other hand, it is also possible to select an optimal reception beam (hereinafter also referred to as an Rx beam) based on a measurement result obtained by receiving a measurement signal with beam sweeping. For example, the terminal device 200 transmits a measurement signal on the uplink. Subsequently, the base station 100 receives the measurement signal with beam sweeping (that is, while switching the Rx beam), and determines which Rx beam is to be received with highest feasibility. In this manner, the optimal Rx beam for the base station 100 is selected. Note that the terminal device 200 can select the optimal Rx beam for the terminal device 200 by executing a similar procedure after switching the base station 100 and the terminal device 200. Hereinafter, reception with beam sweeping is also referred to as beam sweeping reception.

The party that receives and measures the measurement signal transmitted by beam sweeping transmission reports the measurement result to the measurement signal transmission party. The measurement result includes information indicating which Tx beam is optimal. The optimal Tx beam is, for example, a Tx beam having the highest reception power. The measurement result may include information indicating one Tx beam having the highest reception power, or may include information indicating top K Tx highest reception power beams. The measurement result includes, for example, identification information (for example, the index of the beam) of the Tx beam and information indicating the magnitude of the reception power of the Tx beam (for example, reference signal received power (RSRP)) in association with each other.

Note that, in the Tx beam selection procedure, the measurement signal is transmitted in beam sweeping transmission using each of the plurality of Tx beams belonging to the beam group. That is, for example, the base station 100 transmits a reference signal, which is a known signal, as a measurement signal with directivity. Therefore, each of the Tx beams can be considered to be identified by the measurement signal. The transmission resource for the measurement signal transmitted by using the beam may also be referred to as a beam resource. Furthermore, the transmission resources for the measurement signal transmitted in beam sweeping transmission using the beam group may also be referred to as a beam resource group.

### (4) CSI acquisition procedure

The channel state information (CSI) acquisition procedure is executed after selection of an optimal beam by the beam selection procedure involving the beam sweeping described above. The CSI acquisition procedure is performed to acquire the channel quality in communication using the selected beam. For example, a channel quality indicator (CQI) is acquired through the CSI acquisition procedure.

The channel quality is used to determine a communication parameter such as a modulation scheme. When a modulation scheme, for example, quadrature phase shift keying (QPSK), which is capable of transmitting a small number of bits, is adopted when the quality of the channel is good, the result will be low throughput. On the other hand, when a modulation scheme, for example, 256 quadrature amplitude modulation (256QAM), which is capable of transmitting a large number of bits, is adopted when the quality of the channel is poor, the reception party fails to receive data, resulting in low throughput. In this manner, in order to improve the throughput, it is important to properly acquire the channel quality.

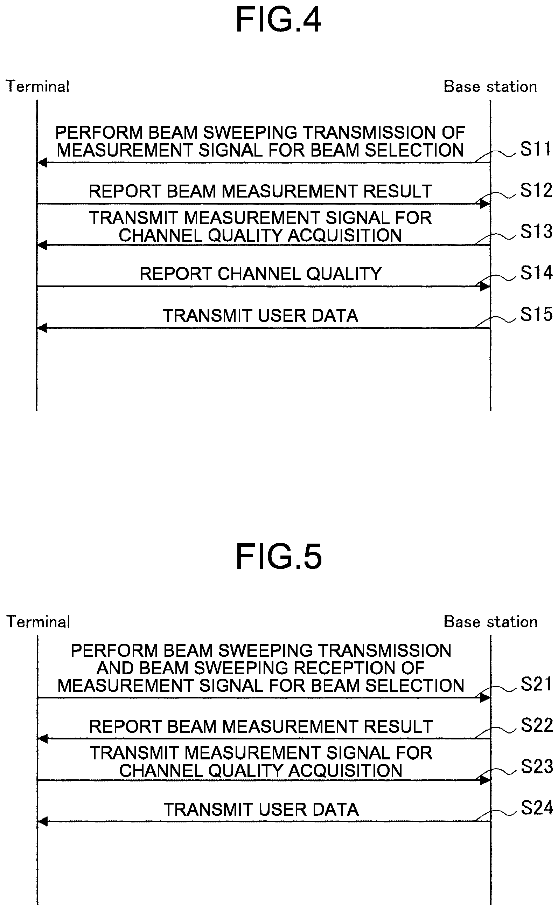

FIG. 4 is a sequence diagram illustrating an example of a flow of a typical beam selection procedure and a typical CSI acquisition procedure executed by the base station 100 and the terminal device 200. As illustrated in FIG. 4, the base station 100 performs beam sweeping transmission of a measurement signal for beam selection (Step S11). Next, the terminal device 200 measures a measurement signal for beam selection, and reports a result of the beam measurement to the base station 100 (Step S12). Such a measurement result includes, for example, information indicating an optimum Tx beam selection result of the base station 100. Next, the base station 100 transmits a measurement signal for channel quality acquisition using the selected optimum beam (Step S13). Next, the terminal device 200 reports the channel quality acquired based on the measurement result of the measurement signal to the base station 100 (Step S14). Subsequently, the base station 100 transmits user data to the terminal device 200 using the reported communication parameter based on the channel quality (Step S15).

### (5) Channel reciprocity

The downlink channel quality is measured based on a measurement signal transmitted on the downlink. On the other hand, the downlink channel quality may also be measured based on a measurement signal transmitted on the uplink. This is because the uplink channel and the downlink channel have reversibility, and quality of these channels is basically the same. Such reversibility is also referred to as channel reciprocity.

When the downlink channel quality is measured based on the downlink measurement signal, a measurement result of the measurement signal for channel quality acquisition is reported as illustrated in Step S14 in FIG. 4. The reporting of measurement results like this can be a large overhead. When the number of transmit antennas is M and the number of receive antennas is N, the channel can be represented by a matrix of N × M. Each element of the matrix is a complex number corresponding to the IQ. For example, when each I/Q is represented by 10 bits, the number of transmit antennas is 100, and the number of receive antennas is eight, report of a channel quality measurement result uses 8 × 100 × 2 × 10 = 16000 bits, which leads to a large overhead.

On the other hand, in a case where the downlink channel quality is measured based on the uplink measurement signal, the measurement subject is the base station 100, eliminating the necessity to report the measurement result. Therefore, by measuring the downlink channel quality based on the uplink measurement signal, it is possible to reduce the overhead related to the reporting of the measurement result, leading to improvement of the throughput. A flow of processing in a case where downlink channel quality is measured based on an uplink measurement signal will be described with reference to FIG. 5.

FIG. 5 is a sequence diagram illustrating another example of a flow of a typical beam selection procedure and a CSI acquisition procedure executed by the base station 100 and the terminal device 200. As illustrated in FIG. 5, the terminal device 200 transmits a measurement signal for beam selection in beam sweeping transmission, and the base station 100 receives the measurement signal with beam sweeping (Step S21). At that time, based on the measurement result, the base station 100 selects the optimum Tx beam for the terminal device 200 and the optimum Rx beam for the base station 100. Next, the base station 100 reports the beam measurement result to the terminal device 200 (Step S22). Such a measurement result includes information indicating a selection result of the optimum Tx beam of the terminal device 200. Next, the terminal device 200 transmits a measurement signal for channel quality acquisition by using the selected Tx beam (Step S23). The base station 100 acquires uplink channel quality based on the measurement result, and acquires downlink channel quality based on the uplink channel quality. Then, the base station 100 transmits user data to the terminal device 200 using the acquired communication parameter based on the downlink channel quality (Step S24).

### (6) Antenna switching

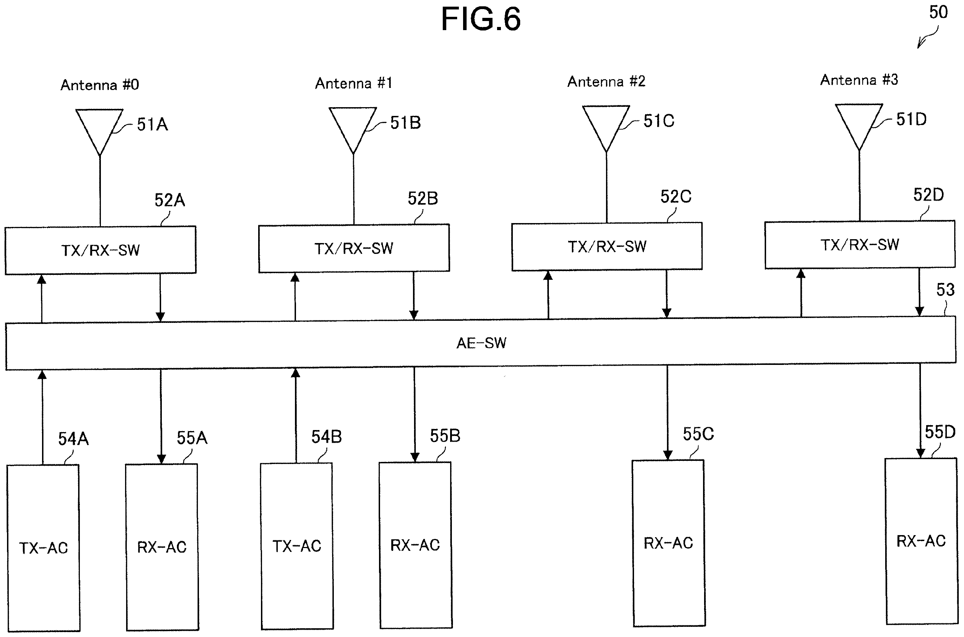

There may be a case having difficulty in using the channel reciprocity described above. This is a case where the number of antennas, the number of reception analog circuits, and the number of transmission analog circuits are unbalanced. An example thereof will be described with reference to FIG. 6.

FIG. 6 is a diagram illustrating antenna switching. An antenna set 50 illustrated in FIG. 6 includes four antennas 51 (51A to 51D), four transmission/reception changeover switches 52 (52A to 52D), an antenna element changeover switch 53, two transmission analog circuits 54 (54A and 54B) (an example of a transmission processing unit), and four reception analog circuits 55 (55A to 55D) (an example of a reception processing unit). Each antenna 51 is also referred to as antennas #0 to #3.

The antenna 51 radiates a signal into space as a radio wave or converts a radio wave in space into a signal. The transmission/reception changeover switch 52 is a switch that switches whether to output a signal to be transmitted to the antenna 51 or to output a signal received by the antenna 51 to the antenna element changeover switch 53. The antenna element changeover switch 53 is a switch that switches connection between the transmission/reception changeover switch 52 and the transmission analog circuit 54 or the reception analog circuit 55. The transmission analog circuit 54 is a circuit that performs analog processing for signal transmission using the antenna 51. The reception analog circuit 55 is a circuit that performs analog processing for signal reception using the antenna 51.

Each antenna 51 is switchably connected to the transmission analog circuit 54 or the reception analog circuit 55 via the transmission/reception changeover switch 52 and the antenna element changeover switch 53. The antenna element changeover switch 53 connects a certain transmission/reception changeover switch 52 and the transmission analog circuit 54 or the reception analog circuit 55 to each other, so as to switch whether a signal is received or transmitted by each antenna 51.

As illustrated in FIG. 6, the number of reception analog circuits 55 is four, which is same as the number of the antennas 51. On the other hand, the number of the transmission analog circuits 54 is two, which is smaller than the number of the antennas 51. Such a state is caused by reducing the transmission analog circuit 54 from the viewpoint of cost, for example. The antenna set 50 can receive a signal by simultaneously using the four antennas 51. On the other hand, the antenna set 50 can transmit a signal by simultaneously using the two antennas 51. In other words, the antenna set 50 cannot transmit a signal by simultaneously using the four antennas 51. Therefore, the terminal device 200 including the antenna set 50 cannot transmit a measurement signal for acquiring the channel quality by simultaneously using the four antennas 51. Since the number of antennas 51 that can be simultaneously used by the terminal device 200 is different between the downlink and the uplink, it is difficult for the base station 100 to acquire the downlink channel quality by using the channel reciprocity.

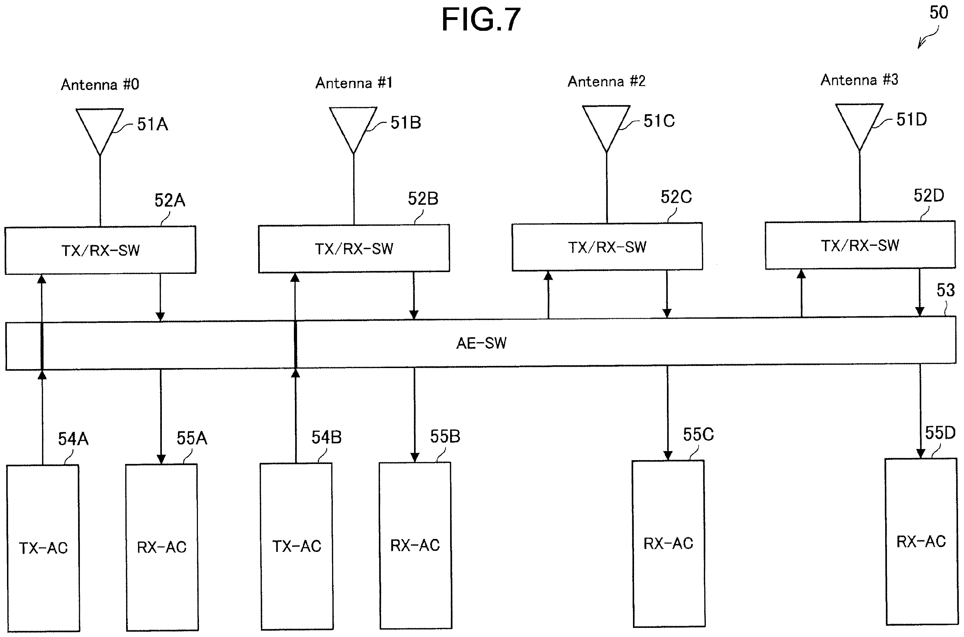

As a countermeasure, there is a technique referred to as antenna switching. An example of this technique will be described with reference to FIGS. 7 to 9.

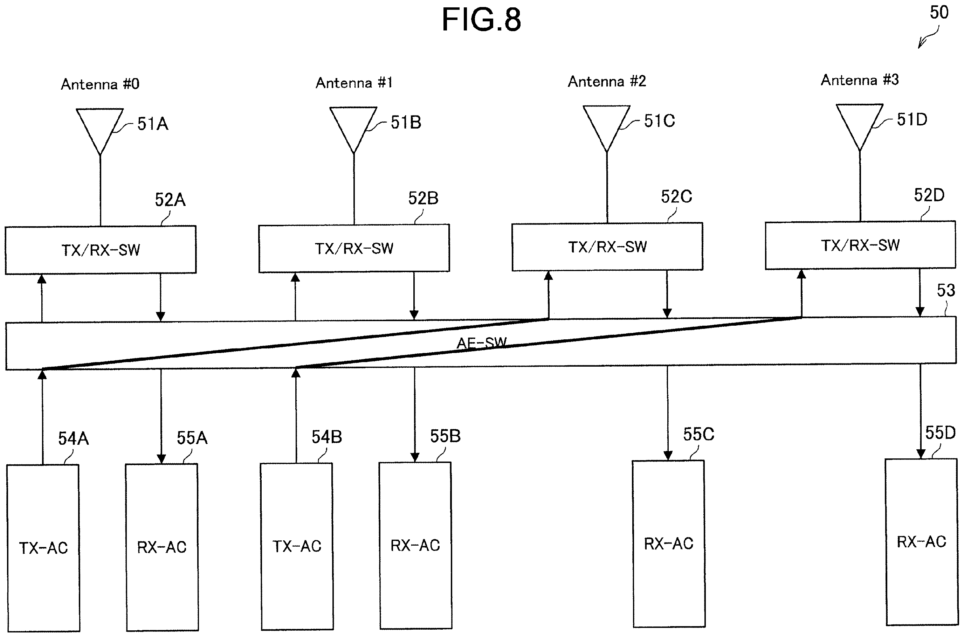

FIGS. 7 and 8 are diagrams illustrating an example of antenna switching. As illustrated in FIG. 7, the antenna element changeover switch 53 connects the transmission analog circuit 54A to the transmission/reception changeover switch 52A and the antenna 51A, and connects the transmission analog circuit 54B to the transmission/reception changeover switch 52B and the antenna 51B. In this state, the terminal device 200 including the antenna set 50 transmits the measurement signal for acquiring the channel quality using the antennas 51A and 51B. Thereafter, as illustrated in FIG. 8, the antenna element changeover switch 53 connects the transmission analog circuit 54A to the transmission/reception changeover switch 52C and the antenna 51C, and connects the transmission analog circuit 54B to the transmission/reception changeover switch 52D and the antenna 51D. In this state, the terminal device 200 including the antenna set 50 transmits the measurement signal for acquiring the channel quality using the antennas 51C and 51D. Such switching of the connection between the antenna 51 and the transmission analog circuit 54 is also referred to as antenna switching.

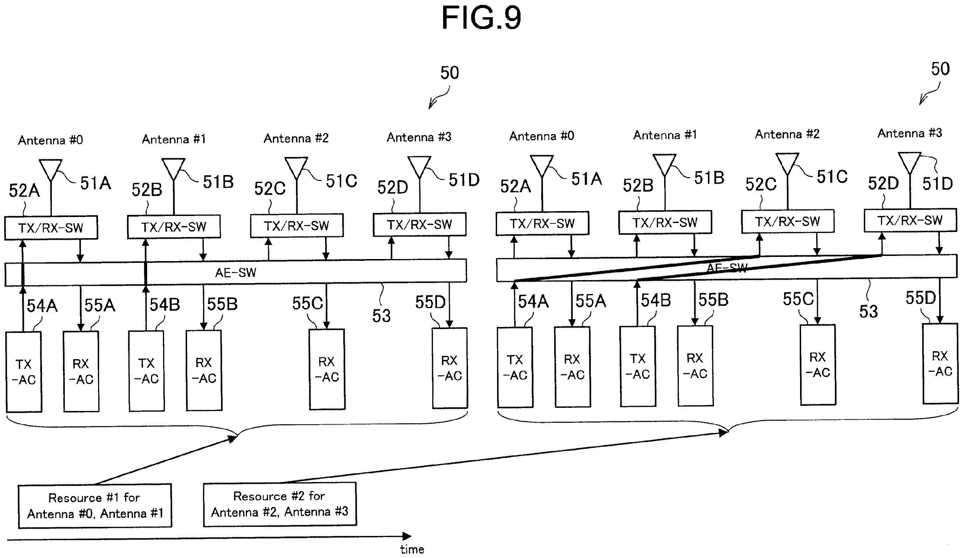

FIG. 9 is a diagram illustrating an example of a relationship between antenna switching and a resource on which the antenna switching is performed. FIG. 9 illustrates a resource #1, which is used by the antenna set 50 in the state illustrated in FIG. 7 to transmit the measurement signal using the antennas #0 and #1, and a resource #2, which is used by the antenna set 50 in the state illustrated in FIG. 8 to transmit the measurement signal using the antennas #2 and #3. Here, the resource #1 and the resource #2 are set to different time resources. Therefore, using these different time resources, transmission of measurement signals using a total of four antennas 51 is performed, specifically, sequentially using two antennas at a time. With this configuration, it is possible, similarly to the downlink, to transmit a measurement signal using a total of four antennas 51, enabling use of channel reciprocity.

Note that the resource #2 is arranged to follow the resource #1 at a predetermined time interval. In this manner, an interval (gap) is provided between the resource #1 and the resource #2. This is because it takes time to stabilize the characteristics of the transmission analog circuit 54 after being switched in the connection between the transmission analog circuit 54 and the antenna set 50. The above-described gap is provided until the characteristics of the transmission analog circuit 54 that has switched the connection with the antenna 51 are stabilized. Such a gap has a length of, for example, about 1 OFDM symbol, but is not limited thereto, and may have a length other than 1 OFDM symbol.

When antenna switching is performed, a signal for antenna switching is transmitted. The signal for antenna switching is transmitted in a certain time resource of a certain BWP, for example. That is, the antenna switching is performed in a certain time resource of a certain BWP. The signal for antenna switching is, for example, a measurement signal.

Transmission of this measurement signal using antenna switching is already standardized in LTE.

Note that a device integrating the antenna set 50 as described above with reference to FIG. 6 and the like is also referred to as an antenna panel. The antenna panel is a device including one or more antennas, one or more transmission analog circuits for signal transmission using the antennas, and one or more reception analog circuits for signal reception using the antennas.

Hereinafter, for example, the number of transmission analog circuits and reception analog circuits included in an antenna panel may be indicated by a symbol such as 2T4R. For example, 2T4R indicates that the antenna panel includes two transmission analog circuits and four reception analog circuits. 1T8R indicates that the antenna panel includes one transmission analog circuit and eight reception analog circuits. In this manner, the number before T indicates the number of transmission systems, and the number before R indicates the number of reception systems.

### <1.3. Overview of technical problems and proposed technology>

When the terminal device 200 includes a plurality of antenna panels described above, the base station 100 has not been able to give an instruction to the terminal device 200 as to which antenna panel the terminal device 200 will use to perform antenna switching.

As described above, when antenna switching is performed on one antenna panel, it is necessary to provide a temporal gap between the resources used for transmission of a measurement signal using individual antennas 51. An increase in the number of antenna panels also increases the resources required for transmission of transmission signals. On the other hand, if it is not possible to instruct which antenna panel will be used to perform antenna switching, the base station 100 cannot perform resource allocation in consideration of such an antenna panel, making it difficult to effectively use the resources.

In view of this, in the proposed technology, the base station 100 transmits a notification including information regarding a reference signal to the terminal device 200. Such a reference signal is, for example, a measurement signal transmitted by the base station 100 in order for the terminal device 200 to monitor the channel quality in Step S13 in FIG. 4.

When having received the notification including the information regarding the reference signal, the terminal device 200 performs antenna switching on the antenna panel that has received the reference signal.

In this manner, by transmitting the notification including the information regarding the reference signal, the base station 100 can control the terminal device 200 to designate the antenna panel that has received the reference signal and perform antenna switching. Therefore, the resource used for the transmission of the measurement signal can be allocated on the premise that the antenna switching using the antenna panel is to be performed, making it possible to more effectively utilize the resources. Note that an example in which the base station 100 effectively uses resources will be described below.

### <<2. Configuration examples>>

### <2.1. Configuration example of base station>

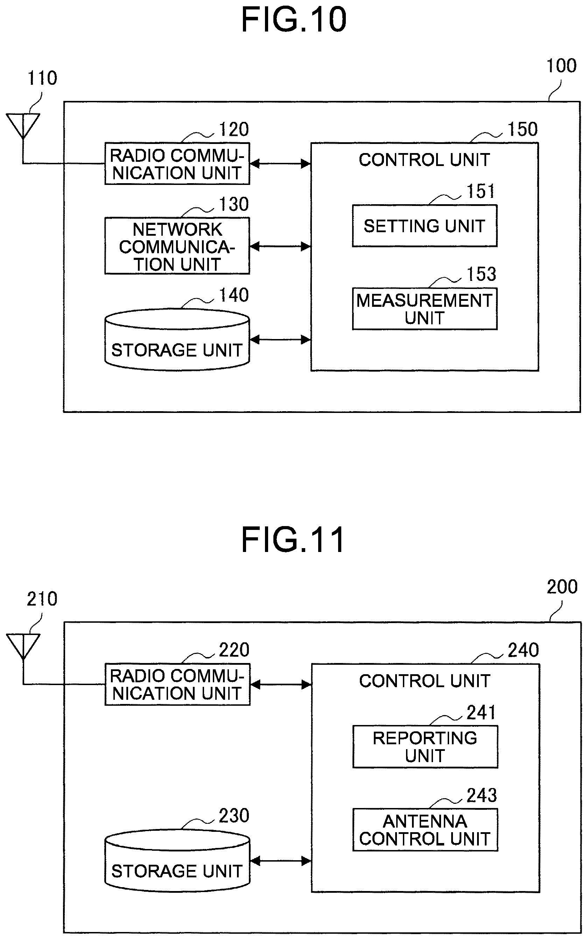

FIG. 10 is a block diagram illustrating an example of a configuration of the base station 100 according to the present embodiment. Referring to FIG. 10, the base station 100 includes an antenna unit 110, a radio communication unit 120, a network communication unit 130, a storage unit 140, and a control unit 150.

### (1) Antenna unit 110

The antenna unit 110 radiates the signal output by the radio communication unit 120 to space as a radio wave. Furthermore, the antenna unit 110 converts a radio wave in space into a signal and outputs the signal to the radio communication unit 120. Note that the antenna unit 110 of the present embodiment includes a plurality of antenna elements and can form a beam.

### (2) Radio communication unit 120

The radio communication unit 120 transmits and receives signals. For example, the radio communication unit 120 transmits a downlink signal to the terminal device 200 and receives an uplink signal from the terminal device 200. Note that the radio communication unit 120 of the present embodiment can communicate with the terminal device 200 by forming a plurality of beams by the antenna unit 110.

### (3) Network communication unit 130

The network communication unit 130 transmits and receives information. For example, the network communication unit 130 transmits information to another node and receives information from another node. For example, the other nodes include other base stations 100 and core network nodes.

### (4) Storage unit 140

The storage unit 140 temporarily or permanently stores a program and various types of data for the operation of the base station 100.

### (5) Control Unit 150

The control unit 150 controls the operation of the entire base station 100 and provides various functions of the base station 100. The control unit 150 includes a setting unit 151 and a measurement unit 153.

The setting unit 151 has a function of performing setting related to communication with the terminal device 200. For example, the setting unit 151 sets an antenna panel for performing antenna switching and sets resources for performing antenna switching. Thereafter, the setting unit 151 notifies the terminal device 200 of an instruction related to antenna switching, for example, a notification including information related to a reference signal.

The measurement unit 153 has a function of measuring the uplink measurement signal transmitted from the terminal device 200 and performing various types of processing based on a result of the measurement. For example, as described above with reference to FIG. 5, the measurement unit 153 measures the measurement signal transmitted from the terminal device 200 in beam sweeping transmission, and selects the optimum Tx beam for the terminal device 200 and the optimum Rx beam for the base station 100. In addition, as described above with reference to FIG. 5, the measurement unit 153 measures the measurement signal transmitted from the terminal device 200 using the optimum Tx beam to acquire the uplink channel quality. Subsequently, the measurement unit 153 acquires the downlink channel quality based on the acquired uplink channel quality.

The control unit 150 can further include other components other than these components. That is, the control unit 150 can perform operations other than the operations of these components.

### <2.2. Configuration example of terminal device>

FIG. 11 is a block diagram illustrating an example of a configuration of the terminal device 200 according to the present embodiment. Referring to FIG. 11, the terminal device 200 includes an antenna unit 210, a radio communication unit 220, a storage unit 230, and a control unit 240.

### (1) Antenna unit 210

The antenna unit 210 radiates the signal output by the radio communication unit 220 to space as a radio wave. Furthermore, the antenna unit 210 converts a radio wave in space into a signal and outputs the signal to the radio communication unit 220. Note that the antenna unit 210 of the present embodiment includes a plurality of antenna elements and can form a beam.

### (2) Radio communication unit 220

The radio communication unit 220 transmits and receives signals. For example, the radio communication unit 220 receives a downlink signal from the base station 100 and transmits an uplink signal to the base station 100. Note that the radio communication unit 220 of the present embodiment can communicate with the base station 100 by forming a plurality of beams by the antenna unit 210.

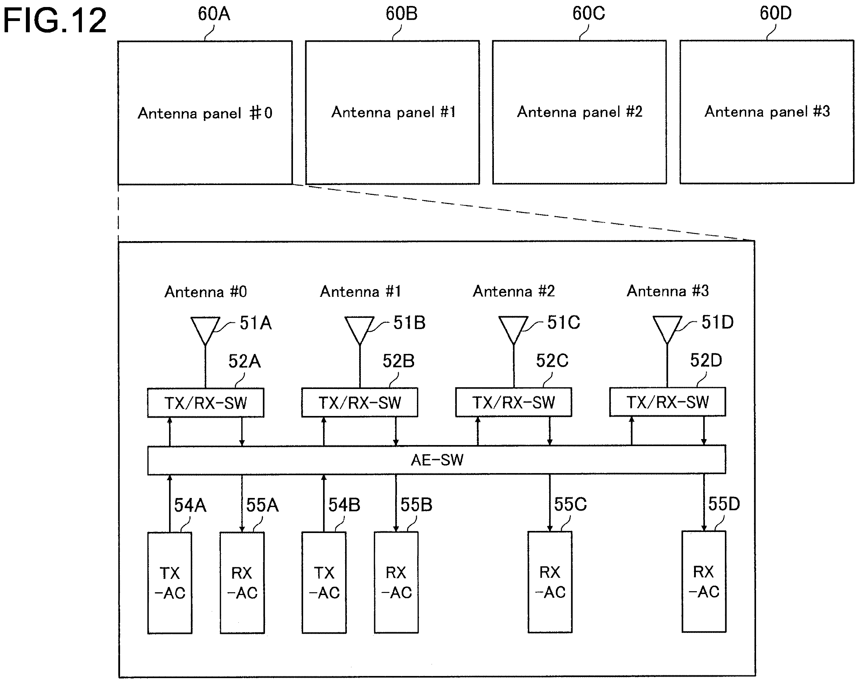

Here, in the present embodiment, the antenna unit 210 and the radio communication unit 220 include a plurality of antenna panels 60 to be described below with reference to FIG. 12. For example, the antenna unit 210 corresponds to the antenna 51 illustrated in FIG. 12. Furthermore, for example, the radio communication unit 220 corresponds to the transmission/reception changeover switch 52, the antenna element changeover switch 53, the transmission analog circuit 54 (an example of a transmission processing unit), and the reception analog circuit 55 (an example of a reception processing unit) illustrated in FIG. 12.

### (3) Storage unit 230

The storage unit 230 temporarily or permanently stores a program and various data for the operation of the terminal device 200.

### (4) Control unit 240

The control unit 240 controls the operation of the entire terminal device 200 and provides various functions of the terminal device 200. The control unit 240 includes a reporting unit 241 and an antenna control unit 243.

The reporting unit 241 has a function of reporting, to the base station 100, various types of information used for antenna switching-related control performed by the base station 100. For example, the reporting unit 241 reports, to the base station 100, antenna panel configuration information and capability information to be described below.

The antenna control unit 243 has a function of controlling implementation of antenna switching under the control of the base station 100. For example, the antenna control unit 243 performs antenna switching by the antenna panel 60 instructed from the base station 100 among the plurality of antenna panels 60 on the resource instructed from the base station 100.

The control unit 240 can further include other components other than these components. That is, the control unit 240 can perform operations other than the operations of these components.

### <2.3. Antenna panel>

### (1) Configuration example of antenna panel

FIG. 12 is a diagram illustrating an example of a configuration of a plurality of antenna panels 60 included in the terminal device 200 according to the present embodiment. As illustrated in FIG. 12, the terminal device 200 includes a plurality of antenna panels 60 (60A to 60D). Each antenna panel 60 is also referred to as antenna panels #0 to #3. The antenna panel 60A includes a configuration similar to the configuration of the antenna set 50 described above with reference to FIG. 6. The antenna panels 60B to 60D can include an antenna set 50 having a configuration same as or different from the configuration of the antenna panel 60A. For example, since the configuration of the antenna set 50 is the same as the configuration of the antenna set 50 illustrated in FIG. 6, the description thereof is omitted. For example, when preparing 16 antennas 51, the terminal device 200 only needs to include four antenna panels 60 having four antennas 51.

### (2) Use case of antenna panel

The plurality of antenna panels 60 described above is used, for example, when receiving a plurality of pieces of data from the base station 100 referred to as a transmission reception point (TRP). More specifically, the terminal device 200 receives downlink data from each TPR on each antenna panel 60.

This is because one antenna panel 60 basically forms one beam. The antenna panel 60 performs analog beamforming, which forms a beam by adjusting a phase of a signal by a phase shifter in the transmission analog circuit 54 or the reception analog circuit 55.

Therefore, in order to receive data transmitted from a plurality of TRPs and arriving from a plurality of directions, the terminal device 200 directs the Rx beams in different directions on a plurality of antenna panels 60 to achieve the reception.

Such reception of data transmitted by a plurality of TRPs may be performed using bands of different frequencies. However, in the present embodiment, unless otherwise specified, it is assumed that data is basically operated using the same frequency band and the same BWP.
in this manner, by receiving the data transmitted by the plurality of TRPs by using the plurality of antenna panels 60, it is possible to improve the throughput.

### (3) Antenna panel use conditions

The terminal device 200 can or cannot be able to simultaneously use the plurality of antenna panels 60 for reception.

In a case where the plurality of antenna panels 60 can be simultaneously used for reception, the terminal device 200 receives data simultaneously by using the plurality of antenna panels 60 using different frequency bands. Alternatively, the terminal device 200 may use beams formed in different directions in each of the plurality of antenna panels 60 to simultaneously receive data using the plurality of antenna panels 60.

In a case where the plurality of antenna panels 60 cannot be simultaneously used for reception, the terminal device 200 uses the plurality of antenna panels 60 for reception by switching the panels in time division switching.

Moreover, the terminal device 200 can or cannot be able to simultaneously use the plurality of antenna panels 60 for transmission.

In a case where the plurality of antenna panels 60 can be simultaneously used for transmission, the terminal device 200 transmits data simultaneously by using the plurality of antenna panels 60 using different frequency bands. Alternatively, the terminal device 200 may use beams formed in different directions in each of the plurality of antenna panels 60 to simultaneously transmit data using the plurality of antenna panels 60.

In a case where the plurality of antenna panels 60 cannot be simultaneously used for transmission, the terminal device 200 uses the plurality of antenna panels 60 for transmission by switching the panels in time division switching.

Compared with simultaneous reception of the plurality of antenna panels 60, simultaneous transmission imposes a high burden on the terminal device 200 in terms of power consumption, for example, and has a high degree of difficulty in implementation.

The following will mainly describe a case where the terminal device 200 performs antenna switching and transmits a reference signal (for example, the measurement signal) in a case where the plurality of antenna panels 60 cannot perform transmission and reception simultaneously, but the application is not limited thereto. The technology according to the present embodiment is also applicable to a case where the terminal device 200 can simultaneously use the plurality of antenna panels 60.

### <2.4. TRP>

Here, the TRP will be briefly described. The TRP is the base stations 100 arranged in plurality in a predetermined area. Therefore, the plurality of TRPs exists around the terminal device 200. The terminal device 200 receives data transmitted from the plurality of TRPs at the same time or at different times. For example, in a case where the terminal device 200 receives data from the plurality of TRPs at the same time, the throughput can be improved according to the number of TRPs as compared with a case where a plurality of pieces of data is received from one TRP. For example, in a case where data is simultaneously received from n TRPs, the throughput of the terminal device 200 is expected to increase by n times.

Note that, in order to simultaneously receive data from a plurality of TRPs, it is desirable to basically use beams in different directions. Therefore, in this case, the terminal device 200 transmits and receives data by using the antenna panels 60 individually different for the TRPs.

In a case where data transmitted by different TRPs is received by the same antenna panel 60, the terminal device 200 cannot receive the data at the same time and receives the data in time division reception. This is because one antenna panel 60 just forms one beam, rather than simultaneously forming a plurality beams. Therefore, for example, when data is transmitted from each of TRP #1 and TRP #2, the terminal device 200 first receives the data transmitted from TRP #1, and then receives the data transmitted from TRP #2.

When the terminal device 200 receives data from a plurality of TRPs, the base station 100 needs to acquire downlink channel quality for each of the plurality of TRPs. As described above, at acquisition of the downlink channel quality, the base station 100 estimates the downlink channel quality by monitoring the uplink channel using the channel reciprocity. Therefore, when communicating using the antenna panel 60 different for each of the plurality of TRPs, the base station 100 needs to monitor the plurality of uplink channels by causing the terminal device 200 to transmit a measurement signal while performing antenna switching on each antenna panel 60.

### «3. Technical features»

### <3.1. Resource arrangement>

### (1) Time division multiplexing

As described above, in order to measure the quality of the uplink channels of the plurality of antenna panels 60 at the base station 100, the terminal device 200 transmits the uplink channel measurement signal from each antenna panel 60 by using the resource designated by the base station 100. For example, a sounding reference signal (SRS), which is an uplink reference signal, is used as the channel measurement signal.

When the SRS is transmitted by performing antenna switching, there is a demand for reducing resources, particularly time resources, to be used for SRS transmission. This is because normal user data cannot be transmitted and received during implementation of antenna switching. In particular, an increase in the number of antennas 50 that perform switching or an increase in the number of antenna panels 60 would also increase the number of the SRS to be transmitted, leading to a possibility of increasing the time not available for transmission/reception of user data.

However, in a conventional case of performing time division operation on the antenna panels 60 with which antenna switching is performed, in other words, in a case of not performing simultaneous transmission with the plurality of antenna panels 60, there has been no clear method to determine how to arrange SRS transmission resources (hereinafter, also referred to as an SRS resource).

On the other hand, as described above, there has been a demand for reducing the time resources, in particular, out of the SRS resources.

In view of this, the base station 100 according to the present embodiment performs time division multiplexing of the SRS resources used for antenna switching using the plurality of antenna panels 60. More specifically, the base station 100 performs time division multiplexing of the SRS resources to be used for antenna switching in the plurality of antenna panels 60 by using a gap required at the time of switching the antennas 50 in one antenna panel 60.

### (1-1) Arrangement example of 1T2R

As described above, in execution of antenna switching, there has been basically a need to take a fixed time until stabilization of the transmission analog circuit 54 after the switching of the antenna 50 is performed. In order to maintain this fixed time, the SRS resources are arranged with a certain gap from each other. For example, in the resource arrangement considering antenna switching of the antenna panels 60 of 1T2R, there has been a gap of 1 OFDM symbol provided between resources of each antenna 50.

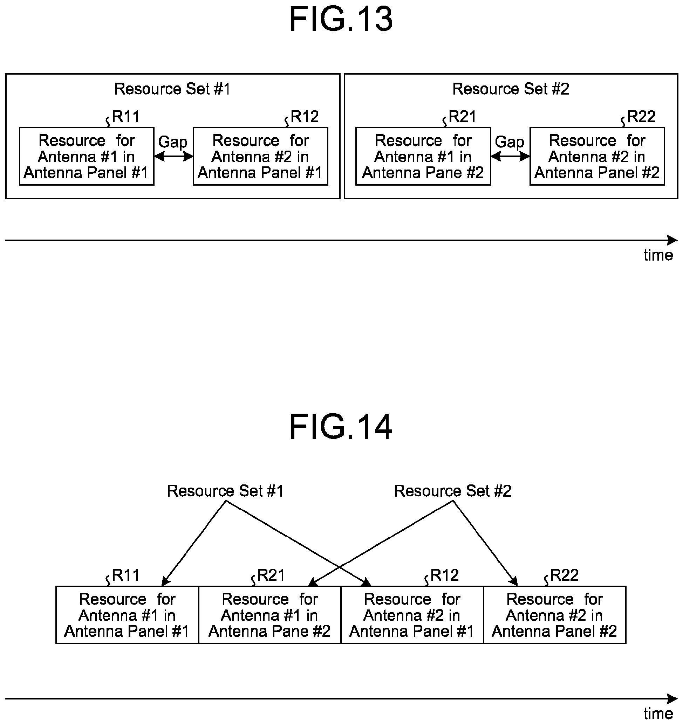

FIG. 13 is a diagram illustrating an arrangement example of SRS resources used for antenna switching in a plurality of antenna panels 60.

FIG. 13 illustrates resource arrangement when antenna panel #1 of 1T2R and antenna panel #2 of 1T2R transmit SRSs. The antenna panel #1 transmits an SRS to TRP #1, for example, while the antenna panel #2 transmits an SRS to TRP #2, for example.

A set of SRS resources used by the antenna panel #1 to transmit the SRS by antenna switching is referred to as a resource set #1. A set of SRS resources used by the antenna panel #2 to transmit the SRS by antenna switching is referred to as a resource set #2.

As described above, when the antenna switching is performed, it is necessary to provide a certain gap before and after the switching. Accordingly, as illustrated in FIG. 13, a gap is provided between resource R11 for the SRS transmission using antenna #1 of antenna panel #1 and resource R12 for the SRS transmission using antenna #2. In this manner, after the resource set #1 in which the gap is provided between the two resources, the resource set #2 in which the gap is similarly provided is arranged. Specifically, in the resource set #2, a resource R21 for the SRS transmission using the antenna #1 and a resource R22 for the SRS transmission using the antenna #2 are arranged with a gap.

In this manner, in a case where the resource sets provided with the gap for switching the antenna 50 are arranged along the time axis, the SRS resource, particularly the resource in the time domain, would increase by the amount of the gap. This is because an increase in the number of times of switching of the antenna 50 or an increase in the number of the antenna panels 60 also increases the number of gaps, leading to an increase of the proportion occupied by the SRS resource (time resource) in the time domain.

The case of FIG. 13 is an example in which a gap is provided also between the resource set #1 and the resource set #2. However, since the switching response time between the plurality of antenna panels 60 is short, such a gap may be a short time or may even been omitted. This is because switching of the antenna panel 60 does not need switching of the connection between the transmission analog circuit 54 and the antenna 50.

Accordingly, the present embodiment performs time division multiplexing of the SRS resources to be used by the base station 100 for antenna switching in the plurality of antenna panels 60 by using a gap required when switching the antennas 50 in one antenna panel 60.

FIG. 14 is a diagram illustrating an arrangement example of SRS resources used for antenna switching in the plurality of antenna panels 60 according to the embodiment of the present disclosure.

As illustrated in FIG. 14, the base station 100 arranges a resource R21 (time resource) used in execution of antenna switching of the antenna panel #2 (corresponding to the first antenna panel) between a plurality of resources R11 and R12 used for the antenna switching of the antenna panel #1 (corresponding to the second antenna panel). The base station 100 arranges the resource R12 to follow the resource R22.

As described above, although it is necessary to provide a gap when switching the antennas 50 with one antenna panel 60, it is not necessary to provide a gap when switching the antenna panels 60. Therefore, the base station 100 does not need to provide a gap between the resource R11 and the resource R21. Similarly, the base station 100 does not need to provide a gap between the resource R21 and the resource R12 or between the resource R12 and the resource R22.

This makes it possible for the base station 100 to reduce time resources required for antenna switching, leading to improvement of resource utilization efficiency.

### (1-2) Arrangement example of 1T4R

Although the above example is a case where the plurality of antenna panels 60 is 1T2R, the antenna panel pattern is not limited thereto. For example, the plurality of antenna panels 60 may be 1T4R.

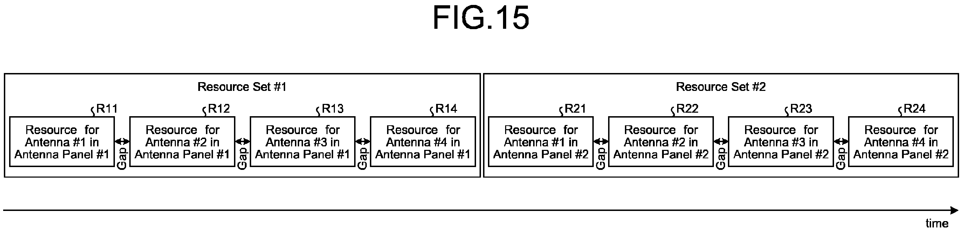

FIG. 15 is a diagram illustrating an arrangement example of SRS resources used for antenna switching in the plurality of antenna panels 60.

FIG. 15 illustrates resource arrangement when antenna panel #1 of 1T4R and antenna panel #2 of 1T4R transmit SRS. The antenna panel #1 transmits an SRS to TRP #1, for example, while the antenna panel #2 transmits an SRS to TRP #2, for example.

A set of SRS resources used by the antenna panel #1 to transmit the SRS by antenna switching is referred to as a resource set #1. A set of SRS resources used by the antenna panel #2 to transmit the SRS by antenna switching is referred to as a resource set #2.

As illustrated in FIG. 15, the resource set #1 includes resources R11 to R14 arranged with gaps for SRS transmission using antennas #1 to # 4 of antenna panel #1, respectively. In addition, the resource set #2 is arranged to follow the resource set #1. The resource set #2 includes resources R21 to R24 arranged with a gap for SRS transmission using the antennas #1 to #4 of the antenna panel #2, respectively.

In this manner, an increase in the number of antennas 50 to be switched also increases the number of gaps, leading to an increase in time resources for performing antenna switching.

To handle this, similarly to 1T2R, in the case of the antenna panel 60 of 1T4R, the base station 100 performs time division multiplexing of the SRS resources used for antenna switching in the plurality of antenna panels 60.

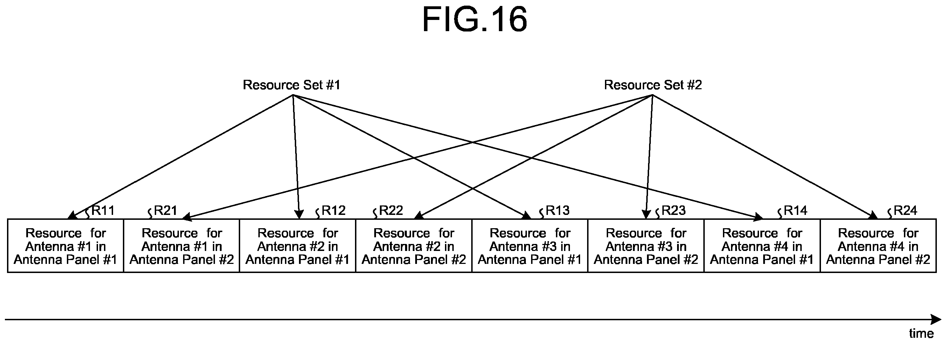

FIG. 16 is a diagram illustrating an arrangement example of SRS resources used for antenna switching in the plurality of antenna panels 60 according to the embodiment of the present disclosure.

As illustrated in FIG. 16, the base station 100 alternately arranges each resource of the resources R11 to R14 of the resource set #1 and each resource of the resources R21 to R24 of the resource set #2. In this manner, by alternately arranging the resources R11 to R14 and resources R21 to R24 of the different resource sets #1 and #2, the base station 100 can reduce time resources required for antenna switching, leading to improvement of resource utilization efficiency.

### (1-3) Arrangement example of 2T4R

Although the above example is a case where the transmission system of the plurality of antenna panels 60 is one system, the number of transmission systems is not limited thereto. For example, the plurality of antenna panels 60 may be antenna panels 60 having two transmission systems such as 2T4R.

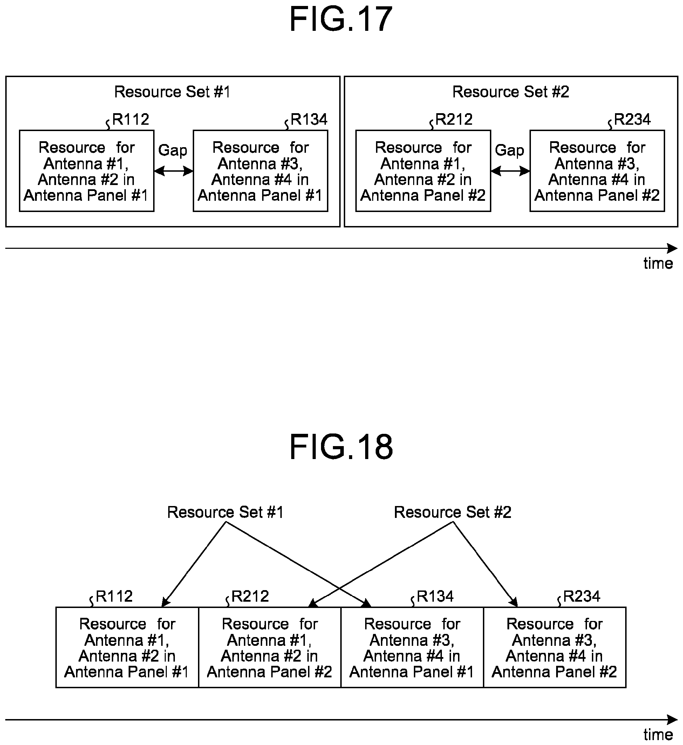

FIG. 17 is a diagram illustrating an arrangement example of SRS resources used for antenna switching in the plurality of antenna panels 60.

FIG. 17 illustrates resource arrangement when antenna panel #1 of 2T4R and antenna panel #2 of 2T4R transmit SRS. The antenna panel #1 transmits an SRS to TRP #1, for example, while the antenna panel #2 transmits an SRS to TRP #2, for example.

A set of SRS resources used by the antenna panel #1 to transmit the SRS by antenna switching is referred to as a resource set #1. A set of SRS resources used by the antenna panel #2 to transmit the SRS by antenna switching is referred to as a resource set #2.

As illustrated in FIG. 17, in the resource set #1, a resource R112 for the SRS transmission using the antennas #1 and #2 of the antenna panel #1 and a resource R134 for the SRS transmission using the antennas # 3 and # 4 are arranged with a gap. In addition, the resource set #2 is arranged to follow the resource set #1. In the resource set #2, a resource R212 for SRS transmission using the antennas #1 and #2 of the antenna panel #2 and a resource R234 for SRS transmission using the antennas #3 and #4 are arranged with a gap.

In this manner, even in a case where the transmission system is two systems, arranging the resource sets #1 and #2 in time series would prolong time resources for performing antenna switching.

To handle this, similarly to 1T2R, in the case of the antenna panel 60 of 2T4R, the base station 100 performs time division multiplexing of the SRS resources used for antenna switching in the plurality of antenna panels 60.

FIG. 18 is a diagram illustrating an arrangement example of SRS resources used for antenna switching in the plurality of antenna panels 60 according to the embodiment of the present disclosure.

As illustrated in FIG. 18, the base station 100 alternately arranges each resource of the resources R112 to R134 of the resource set #1 and each resource of the resources R212 to R234 of the resource set #2. In this manner, by alternately arranging the resources R112 to R134 and resources R212 to R234 of the different resource sets #1 and #2, the base station 100 can reduce time resources required for antenna switching, leading to improvement of resource utilization efficiency.

### (1-4) Other arrangement examples

Although above arrangement example is an example in which the plurality of antenna panels 60 has the same number of systems, the number of systems of the plurality of antenna panels 60 may be different from each other.

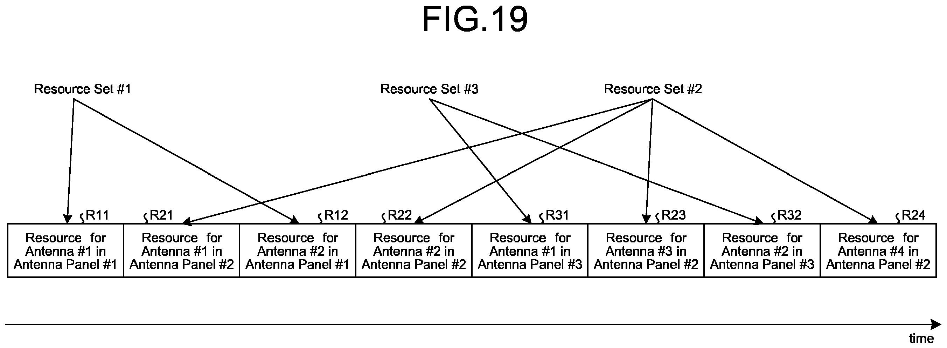

FIG. 19 is a diagram illustrating an arrangement example of SRS resources used for antenna switching in the plurality of antenna panels 60 according to the embodiment of the present disclosure.

FIG. 19 illustrates resource arrangement when antenna panel #1 of 1T2R, antenna panel #2 of 1T4R, and antenna panel #3 of 1T2R transmit SRS. The antenna panel #1 transmits an SRS to TRP #1, for example, while the antenna panel #2 transmits an SRS to TRP #2, for example. Antenna panel #3 transmits the SRS to TRP #3, for example.

A set of SRS resources used by the antenna panel #1 to transmit the SRS by antenna switching is referred to as a resource set #1. The resource set #1 includes a resource R11 for the SRS to be transmitted by the antenna #1 and a resource R12 for the SRS to be transmitted by the antenna #2.

A set of SRS resources used by the antenna panel #2 to transmit the SRS by antenna switching is referred to as a resource set #2. The resource set #1 includes resources R21 to R24 for the SRS to be transmitted by the antennas #1 to #4.

A set of SRS resources used by the antenna panel #3 to transmit the SRS by antenna switching is referred to as a resource set #3. The resource set # 3 includes a resource R31 for the SRS to be transmitted by the antenna #1 and a resource R32 for the SRS to be transmitted by the antenna #2.

As illustrated in FIG. 19, the base station 100 alternately arranges each of the resources R22 to R24 included in the resource set #2 and each of the resources R11, R12, R31, and R32 included in the resource sets #1 and # 3.

This suppresses consecutive arrangement of the resources included in one resource set, eliminating the necessity for the base station 100 to provide a gap between the resources. This makes it possible for the base station 100 to reduce time resources required for antenna switching, leading to improvement of resource utilization efficiency.

The number of transmission and reception systems and the number of antenna panels 60 described above are examples, and the numbers are not limited thereto. The base station 100 is only required to arrange the individual resources to avoid consecutive arrangement of the resources included in one resource set, and the number of systems and the number of antenna panels can take various values.

Still, with an increased number of systems or antenna panels, or an increase in the combination thereof, might complicate resource arrangement by the base station 100. To avoid this, for example, the base station 100 according to the present embodiment performs time division multiplexing of resource sets when performing antenna switching in a plurality of antenna panels 60 having the same number of systems. Specifically, for example, the base station 100 performs time division multiplexing of a resource set using the above-described gap in a case where antenna switching is performed by switching a plurality of antenna panels 60 of 1T2R.

This makes it possible to reduce the complexity of resource arrangement of the base station 100 as well as reducing the complexity of switching between the antenna panel 60 and the antenna 50 in the terminal device 200.

### (2) Frequency multiplexing

The above-described example is a case of resource arrangement when the plurality of antenna panels 60 is switched in a time division switching. However, the SRS may be transmitted simultaneously by the plurality of antenna panels 60.

When the terminal device 200 simultaneously performs signal transmission on the plurality of antenna panels 60, there is a high burden on the terminal device 200 due to the reasons of limitation of peak power, isolation between the transmission analog circuits 54, and the like. Therefore, 3GPP Rel 15 and Rel 16 specify that the terminal device 200 shall not transmit signals simultaneously using the plurality of antenna panels 60.

However, in order to improve the reliability of the uplink, it is desirable that the terminal device 200 simultaneously perform transmission by using the plurality of antenna panels 60.

Furthermore, even in a case where the terminal device 200 simultaneously performs transmission using the plurality of antenna panels 60 as described above, it is still desirable to reduce time resources for antenna switching.

In view of this, in the present embodiment, when the terminal device 200 simultaneously performs transmission using the plurality of antenna panels 60, the base station 100 uses frequency domain multiplexing to multiplex the SRS resources allocated for the antenna switching of each antenna panel 60.

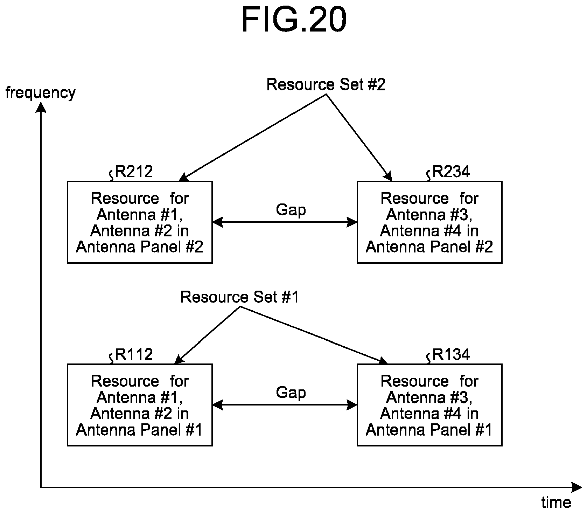

FIG. 20 is a diagram illustrating an arrangement example of SRS resources used for antenna switching in the plurality of antenna panels 60 according to the embodiment of the present disclosure.

FIG. 20 illustrates resource arrangement when antenna panel #1 of 2T4R and antenna panel #2 of 2T4R transmit an SRS. The antenna panel #1 transmits an SRS to TRP #1, for example, while the antenna panel #2 transmits an SRS to TRP #2, for example.

A set of SRS resources used by the antenna panel #1 to transmit the SRS by antenna switching is referred to as a resource set #1. A set of SRS resources used by the antenna panel #2 to transmit the SRS by antenna switching is referred to as a resource set #2.

As illustrated in FIG. 20, in the resource set #1, a resource R112 for the SRS transmission using the antennas #1 and #2 of the antenna panel #1 and a resource R134 for the SRS transmission using the antennas # 3 and # 4 are arranged with a gap. In addition, the resource set #2 is arranged in a frequency domain different from the frequency domain of the resource set #1. In the resource set #2, a resource R212 for SRS transmission using the antennas #1 and #2 of the antenna panel #2 and a resource R234 for SRS transmission using the antennas #3 and #4 are arranged with a gap.

In this manner, when the terminal device 200 simultaneously performs transmission using the plurality of antenna panels 60, the base station 100 uses frequency domain multiplexing to multiplex the SRS resources allocated for the antenna switching of each antenna panel 60, making it possible to reduce the time resource.

### <3.2. Relationship between resource and antenna panel>

In the resource arrangement described above, the base station 100 arranges the resource for each of the plurality of antenna panels 60. However, there has been no known method in which the base station 100 specifically designates which antenna panel 60 is to be used for the terminal device 200 to transmit the SRS. That is, although the base station 100 has conventionally designated the SRS resource to be used in the antenna switching, it has not been possible to specifically designate which antenna panel 60 is to be used, making it difficult for the terminal device 200 to grasp which antenna panel 60 should transmit the SRS.

Therefore, in the present embodiment, by using the downlink reference signal, the base station 100 designates the antenna panel 60 that performs antenna switching using the designated SRS resource. An example of the downlink reference signal is a Channel State Information Reference Signal (CSI-RS). The base station 100 transmits a plurality of CSI-RSs as downlink reference signals. The base station 100 transmits a notification including information regarding one CSI-RS among the plurality of CSI-RSs to the terminal device 200, thereby requesting the terminal device 200 to transmit the SRS by designating the antenna panel 60 used at reception of the CSI-RS included in the notification.

By designating the CSI-RS, the base station 100 designates the antenna panel 60 having a spatial relation with the CSI-RS. The spatial relation is used for the base station 100 to request the terminal device 200 to perform transmission using the same antenna panel 60 as the antenna panel 60 used at reception of the CSI-RS.

When the base station 100 transmits the CSI-RS as a downlink reference signal, the terminal device 200 autonomously selects and receives the desirable antenna panel 60. Here, the desirable antenna panel 60 is, for example, the antenna panel 60 capable of forming a beam that achieves a high reception power.

The base station 100 designates the terminal device 200 to transmit the SRS which is the uplink reference signal using the antenna panel 60 used at reception of the CSI-RS.

For example, it is assumed that the base station 100 transmits CSI-RS #1 and CSI-RS #2 to the terminal device 200 as downlink reference signals. At this time, for example, the base station 100 notifies the terminal device 200 of information regarding the CSI-RS #1, thereby designating the antenna panel 60 that has received the CSI-RS #1 as the antenna panel 60 that is to transmit the SRS in the resource set #1. Furthermore, for example, the base station 100 notifies the terminal device 200 of information regarding the CSI-RS #2, thereby designating the antenna panel 60 that has received the CSI-RS #2 as the antenna panel 60 that is to transmit the SRS in the resource set #2.

In this manner, by transmitting the notification including the information regarding the reference signal to the terminal device 200, the base station 100 can designate the antenna panel 60 using the SRS resources multiplexed in the time direction as described above. This makes it possible for the base station 100 to allocate resources to the predetermined antenna panel 60, leading to further improvement in the utilization efficiency of the resources.

Here is an assumed case where the terminal device 200 has used the same antenna panels 60 to receive CSI-RS #1 and CSI-RS #2, in other words, both CSI-RS #1 and CSI-RS #2 have been received by one antenna panel. In this case, even when the base station 100 designates CSI-RS #1 and CSI-RS #2, the terminal device 200 transmits the SRS using the same antenna panel 60. Therefore, the base station 100 is not capable of multiplexing the SRS resources in the time direction using the gap of the resource set described above.

To handle this, in the present embodiment, the base station 100 acquires the information (hereinafter, also referred to as a stamp in some cases) regarding the antenna panel 60 used at reception of the CSI-RS from the terminal device 200. With this configuration, the base station 100 can confirm whether the antenna panels 60 that have received the plurality of CSI-RSs are the same, and can appropriately designate the antenna panel 60 to be used in the SRS resource.

When the reception power of CSI-RS #1 is the highest among the plurality of CSI-RSs received with beam sweeping, the terminal device 200 reports the result to the base station 100. At this time, the terminal device 200 includes, in the report, information indicating which antenna panel 60 has received the CSI-RS #1. Similarly, when the reception power of CSI-RS #2 is the highest among a plurality of CSI-RSs received with beam sweeping, the terminal device 200 includes, in the report to the base station 100, information indicating which antenna panel 60 has been used to receive CSI-RS #2.

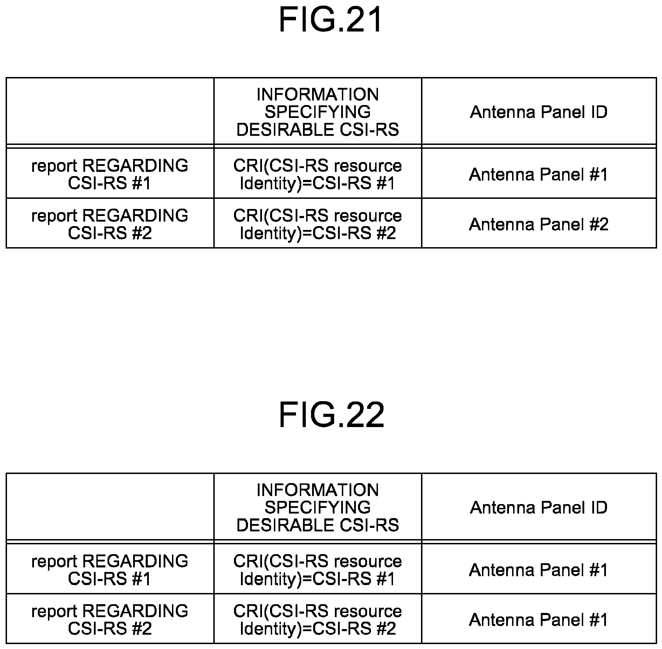

FIG. 21 is a table for describing an example of information reported by the terminal device 200 according to the embodiment of the present disclosure.

As illustrated in FIG. 21, the terminal device 200 reports, as a report regarding CSI-RS #1, information that a CSI-RS resource identity (CRI) is CSI-RS #1 as information specifying a desirable CSI-RS. Furthermore, the terminal device 200 includes, in the report regarding the antenna panel 60 that has received the CSI-RS #1, information by which antenna is identified (identification information: ID). In the example of FIG. 21, the terminal device 200 includes, in the report, the antenna panel ID indicating that the antenna panel #1 has been used.

In addition, the terminal device 200 reports, as a report regarding CSI-RS #2, information that a CSI-RS resource identity (CRI) is CSI-RS #2 as information specifying a desirable CSI-RS. Furthermore, the terminal device 200 includes, in the report regarding the antenna panel 60 that has received the CSI-RS #2, information identifying the antenna (identification information: ID). In the example of FIG. 21, the terminal device 200 includes, in the report, the antenna panel ID indicating that the antenna panel #2 has been used.

FIG. 22 is a table illustrating another example of information reported by the terminal device 200 according to the embodiment of the present disclosure.

As illustrated in FIG. 22, the terminal device 200 reports, as a report regarding CSI-RS #1, information that CSI-RS resource identity (CRI) is CSI-RS #1 as information specifying a desirable CSI-RS. Furthermore, the terminal device 200 includes, in the report regarding the antenna panel 60 that has received the CSI-RS #1, information by which antenna is identified (identification information: ID). In the example of FIG. 22, the terminal device 200 includes, in the report, the antenna panel ID indicating that the antenna panel #1 has been used.

In addition, the terminal device 200 reports, as a report regarding CSI-RS #2, information that a CSI-RS resource identity (CRI) is CSI-RS #2 as information specifying a desirable CSI-RS. Furthermore, the terminal device 200 includes, in the report regarding the antenna panel 60 that has received the CSI-RS #2, information identifying the antenna (identification information: ID). In the example of FIG. 22, the terminal device 200 includes, in the report, the antenna panel ID indicating that the antenna panel #1 has been used.

In this manner, the terminal device 200 notifies the base station 100 of the information regarding the antenna panel 60 used to receive the CSI-RS. Accordingly, the base station 100 can confirm whether the terminal device 200 has used the same antenna panel 60 to receive the plurality of CSI-RSs.

When the antenna panels 60 used to receive the plurality of CSI-RSs are the same, the base station 200 arranges a plurality of resource sets adjacent to each other in the time direction, for example, as illustrated in FIGS. 13, 15, and 17, and notifies the terminal device 200 of the arrangement.

In contrast, when the antenna panels 60 used to receive the plurality of CSI-RSs are different from each other, for example, as illustrated in FIGS. 14, 16, and 18, the base station 200 multiplexes the resources included in the plurality of resource sets in the time direction by alternately arranging the resources, and notifies the terminal device 200 of the arrangement.

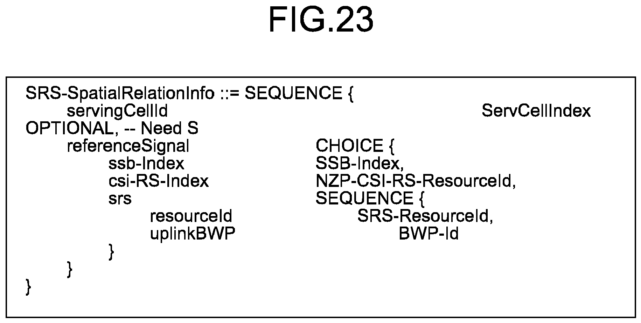

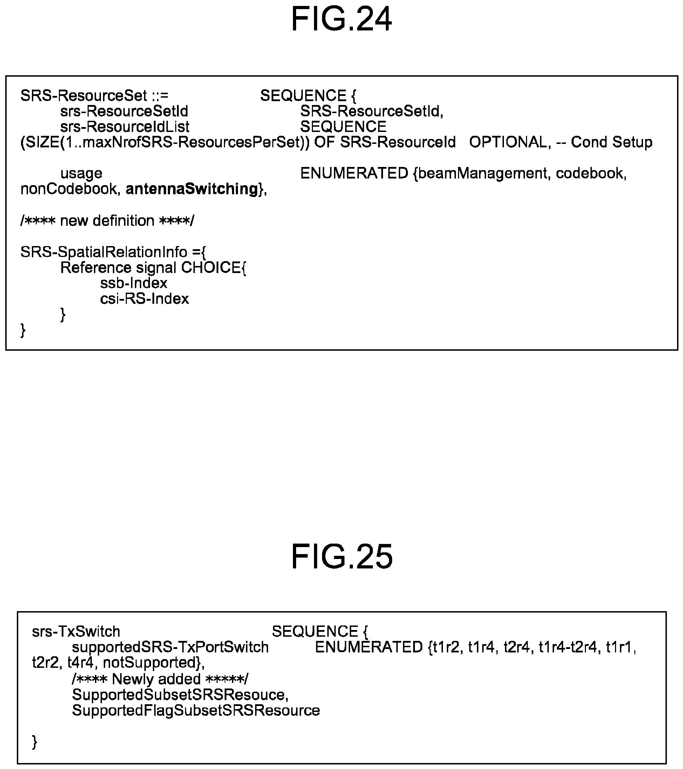

An example of signaling regarding the base station 100 will be described below with reference to FIGS. 23 and 24. FIG. 23 is a diagram illustrating conventional Spatial Relation Info. Spatial Relation Info illustrated in FIG. 23 is described in 3GPP TS36.311.

As illustrated in FIG. 23, by using Spatial Relation Info, the base station 100 designates a beam to be used in transmitting the SRS resource. More specifically, the base station 100 uses Spatial Relation Info to designate to use a Tx beam facing the same direction as the Rx beam used to receive the CSI-RS and the synchronization signal block (SSB).

FIG. 24 is a diagram illustrating an SRS resource set according to the embodiment of the present disclosure.

Instead of designating one SRS resource ID for designating Spatial Relation Info, the present embodiment provides Spatial Relation Info designating an SRS resource set to be used for antenna switching. Accordingly, the present embodiment defines a new SRS resource set. In the SRS resource set, the SRS resource set ID and the SRS resource belonging to the resource set identified by the ID are comprehensively associated with each other. That is, for example, in the case of the resource arrangement illustrated in FIG. 14, the resource sets #1 and #2 are associated with resources R11, R12, R21, and R22 individually included in the resource sets #1 and #2 by the newly defined SRS resource set. It is also explicitly indicated that such an SRS resource set is used for antenna switching.

Furthermore, as illustrated in FIG. 24, Spatial Relation Info is provided in the SRS resource set of the present embodiment.

In the Spatial Relation Info illustrated in FIG. 24, it is possible to select the SSB or the CSI-RS on which designation of the antenna panel 60 is based. Here, when the antenna panel 60 is designated based on the CSI-RS, the base station 100 can designate two or more CSI-RSs. That is, the base station 100 may designate a plurality of CSI-RSs the terminal device 200 reports as received from a plurality of TRPs. By designating a plurality of CSI-RSs, the base station 100 designates, to the terminal device 200, to transmit the SRS of the antenna switching using the antenna panel 60 that has received the designated CSI-RS.

Note that the SRS resource set illustrated in FIG. 24 is used for the setting of one resource set (for example, the resource set #1), and another SRS resource set is used for the setting of another resource set (for example, the resource set #2). That is, for example, when antenna switching is performed on two antenna panels 60, two SRS resource sets illustrated in FIG. 24 are set.

Note that the base station 100 may designate a plurality of resource sets #1 and #2 by transmitting information "csi-RS-Index 1, csi-RS-Index 2" to the terminal device 200 with one information element in downlink control information (DCI). In this case, the base station 100 can also designate the antenna panel 60 to be used for antenna switching, that is, the specific antenna panel 60 used to receive a specific CSI-RS.

In this manner, the base station 100 can designate the antenna panel 60 to be used for antenna switching. This makes it possible for the base station 100 to perform the SRS resource arrangement in consideration of the antenna panel 60 used for the antenna switching, leading to more effective use of the resource.

For example, it is assumed that when channel estimation is performed in the uplink using channel reciprocity to acquire downlink channel quality, antenna switching is performed on the plurality of antenna panels 60. In this case, in order to improve the accuracy of channel estimation, it is desirable to acquire the quality of the channels of the plurality of antenna panels 60 at substantially the same time.

For this purpose, as described above, it is necessary to perform multiplexing of resource sets to shorten the time for transmitting the SRS by all the antenna panels 60.

By designating the antenna panel 60 used for the antenna switching, the base station 100 according to the present embodiment performs multiplexing of the resource set as described above, making it possible to shorten the transmission time of the SRS of all the antenna panels 60. With this configuration, the base station 100 can further improve the measurement accuracy of the channel quality, leading to improvement of the throughput.

### <3.3. Definition of antenna panel used to perform antenna switching>

The base station 100 transmits, to the terminal device 200, a notification designating an antenna switching mode including information (for example, 1T2R or 1T4R) related to the number of transmission analog circuits 54 (an example of a transmission processing unit) and the number of reception analog circuits 55 (an example of a reception processing unit) allocated in the SRS resource, for example. In 1T2R, 1T indicates that the number of transmission analog circuits 54, in other words, the number of antennas used for transmission is one. In 1T2R, 2R indicates that the number of reception analog circuits 55, in other words, the number of antennas used for reception is two.

The terminal device 200 performs antenna switching on the antenna panel 60 based on the notification.

At this time, in the conventional antenna switching, antenna switching is defined for the antenna panel 60 of 1T2R, 1T4R, and 1T8R. However, the antenna switching is also possible in the antenna panel 60 other than these types of antenna panel 60. For example, antenna switching can also be defined for the antenna panel 60 of 1T6R. However, defining the antenna switching for the antenna panel 60 other than 1T2R, 1T4R, and 1T8R would complicate the system.

For example, when the antenna switching is defined for the antenna panel 60 of 1T2R, 1T4R, 1T6R, and 1T8R and the antenna switching of 1T16R is further defined, the definition of 1T12R would be also required. In this manner, an increase in the number of the transmission analog circuits 54 and the reception analog circuits 55 of the antenna panel 60 on which the antenna switching can be performed would make it difficult to cope with the antenna switching in the antenna panel 60.

Therefore, in the present embodiment, the antenna switching is defined for the antenna panels 60 of 1T2R, 1T4R, and 1T8R, in other words, the base station 100 performs SRS resource allocation for the antenna panels 60 of 1T2R, 1T4R, and 1T8R. In this manner, the base station 100 performs SRS resource allocation on the assumption of the antenna panel 60 in which the number of transmission analog circuits 54 is a power of 2 and the number of reception analog circuits 55 is a power of 2.

On the other hand, in a case where the terminal device 200 has the antenna panel 60 in which the number of transmission analog circuits 54 is a power of 2 while the number of reception analog circuits 55 is not a power of 2, the terminal device 200 performs antenna switching using an allocated SRS resource. More specifically, the terminal device 200 performs antenna switching on the antenna panels 60 of the transmission analog circuit 54 and the reception analog circuit 55, the number of which is equal to or less than the number of the transmission analog circuits 54 and the number of the reception analog circuits 55 to which the base station 100 has allocated the SRS resources.

For example, when the SRS resource of 1T8R is allocated from the base station 100, the terminal device 200 performs the antenna switching with the antenna panel 60 of 1T6R in which the reception analog circuit 55 is fewer than 1T8R.

Note that, even when the SRS resource of 1T8R is allocated from the base station 100, in a case where the terminal device 200 includes only the antenna panel 60 of 1T2R or less, it is allowable to determine that there is a setting error of the base station 100 and that the antenna switching will not be performed.

Alternatively, it is assumed that the terminal device 200 includes the antenna panel 60 (for example, antenna panel 60 of 1T6R) including the transmission analog circuit 54 or the reception analog circuit 55 the number of which is not a power of 2. In this case, for example, when the SRS resource of 1T8R is allocated from the base station 100, the terminal device 200 performs antenna switching on the antenna panel 60 of 1T6R. On the other hand, for example, when the SRS resource of 1T16R is allocated from the base station 100, the terminal device 200 determines that there is a setting error of the base station 100 and does not perform antenna switching.

In this manner, when the SRS resource close to the capability of the terminal device 200 is allocated, the terminal device 200 may perform the antenna switching with the allocated SRS resource. More specifically, when the SRS resource is allocated with a power of 2 closest to the number of the transmission analog circuits 54 and the reception analog circuits 55 of the antenna panel 60 possessed by the own terminal device 200, the terminal device 200 performs the antenna switching in the antenna panel 60.

With this method, even when there is an increase in the number of combinations of the transmission analog circuits 54 and the reception analog circuits 55 included in the antenna panel 60 of the terminal device 200, the antenna switching can be performed without increasing the labor of resource allocation by the base station 100.

Note that the base station 100 may notify the terminal device 200 of information indicating whether the antenna panel 60 other than the capability assumed at the time of allocation may perform the antenna switching in the allocated SRS resource.

For example, in a case where such information is 1T8R Flag = 1, the terminal device 200 may perform the antenna switching on the antenna panel 60 (for example, 1T6R or 1T2R) other than 1T8R. In contrast, when such information is 1T8R Flag = 0, the terminal device 200 performs antenna switching on the antenna panel 60 of 1T8R, and does not perform antenna switching on the other antenna panels 60.

In this manner, the base station 100 can explicitly notify whether to perform antenna switching.

### <3.4. Capability of terminal device>

In order to perform the antenna switching described above, the terminal device 200 notifies the base station 100 of its own capability. This makes it possible for the base station 100 to set an appropriate SRS resource according to the capability of the terminal device 200.

FIG. 25 is a diagram illustrating the capability of transmission from the terminal device 200 to the base station 100 according to the embodiment of the present disclosure.

As illustrated in FIG. 25, the terminal device 200 notifies the base station 100 whether it is possible to perform antenna switching corresponding to a plurality of TRPs, for example.

In addition, the terminal device 200 notifies the base station 100 of information (an example of mode information) related to the antenna switching mode including information (for example, 1T2R or 1T4R) related to the number of transmission analog circuits 54 and the number of reception analog circuits 55. The terminal device 200 notifies the base station 100 of mode information regarding an antenna switching mode that can be implemented on the terminal device itself. For example, in a case where the terminal device 200 includes the antenna panels 60 of 1T2R and 1T4R, the terminal device notifies the base station 100 of mode information including "1T2R and 1T4R".

In addition, the terminal device 200 notifies the base station 100 of information (an example of implementation information) indicating whether antenna switching can be performed in a mode other than the switching mode notified by the mode information. For example, the terminal device 200 notifies the base station 100 of information indicating whether the antenna panel 60 of 1T6R can perform antenna switching, for example, even when the SRS resource is allocated with a designation of 1T8R.

Alternatively, it is also allowable to notify the base station 100 of information indicating whether the base station 100 can determine the above-described Flag (for example, 1T8R Flag).
in this manner, the terminal device 200 notifies the base station 100 of its own capability necessary for antenna switching, making it possible for the base station 100 to grasp the capability of the terminal device 200. With this configuration, the base station 100 can appropriately allocate the SRS resource for antenna switching.

Note that the capability of the terminal device 200 described above is an example, and the terminal device 200 may notify the base station 100 of information other than the capability described above.

### <<4. Communication processing»

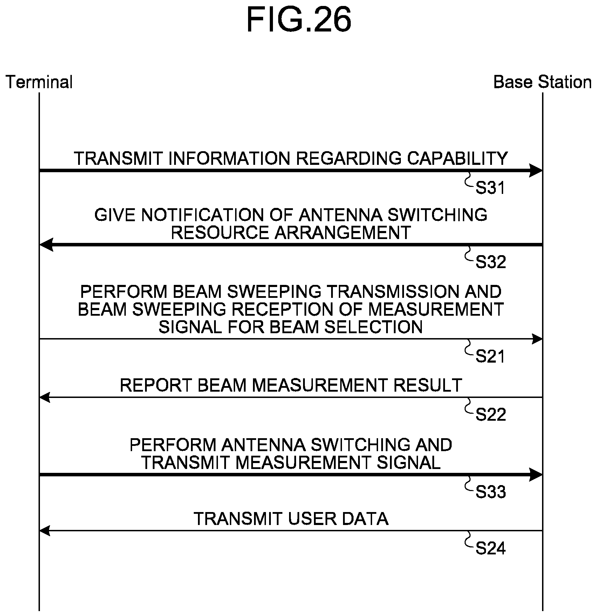

FIG. 26 is a sequence diagram illustrating a flow of communication processing according to the embodiment of the present disclosure. Note that the same processing as those illustrated in FIG. 5 are denoted by the same reference numerals, and description thereof is omitted.

As illustrated in FIG. 26, the terminal device 200 first transmits, to the base station 100, information regarding capability for performing antenna switching (Step S31) .

Subsequently, the base station 100 notifies the terminal device 200 of resource arrangement for the antenna switching (Step S32). At this time, by giving a notification including information regarding a downlink reference signal (for example, CSI-RS), the base station 100 designates the antenna panel 60 to be used by the terminal device 200.

The terminal device 200 that has received the report of the measurement result of the beam in Step S22 performs antenna switching and transmits a measurement signal (for example, SRS) to the base station 100 (Step S33). At this time, using the designated resource, the terminal device 200 transmits the measurement signal using the designated antenna panel 60 based on the notification received in Step S32.

### <<5. Application examples>>

The technology according to the present disclosure can be applied to various products.

For example, the base station 100 may be implemented as any type of evolved Node B (eNB) such as a macro eNB or a small eNB. The small eNB may be an eNB that covers a cell smaller than a macro cell, such as a pico eNB, a micro eNB, or a home (femto) eNB. Instead, the base station 100 may be implemented as other types of base station such as a Node B or a Base Transceiver Station (BTS). The base station 100 may include a main body (also referred to as a base station device) that controls radio communication, and one or more Remote Radio Heads (RRHs) arranged at a location different from the main body. Furthermore, various types of terminals, which will be described below, may operate as the base station 100 by temporarily or semi-permanently executing the base station functionalities.

Furthermore, for example, the terminal device 200 may be implemented as a mobile terminal such as a smartphone, a tablet personal computer (PC), a laptop PC, a portable game terminal, a portable/dongle type mobile router, and a digital camera, or as an in-vehicle terminal such as a car navigator. Furthermore, the terminal device 200 may be implemented as a terminal (also referred to as a Machine Type Communication (MTC) terminal) that performs Machine To Machine (M2M) communication. Furthermore, the terminal device 200 may be a radio communication module (for example, an integrated circuit module formed with one die) mounted on these terminals.

### <5.1. Application examples related to base station>

### (First application example)

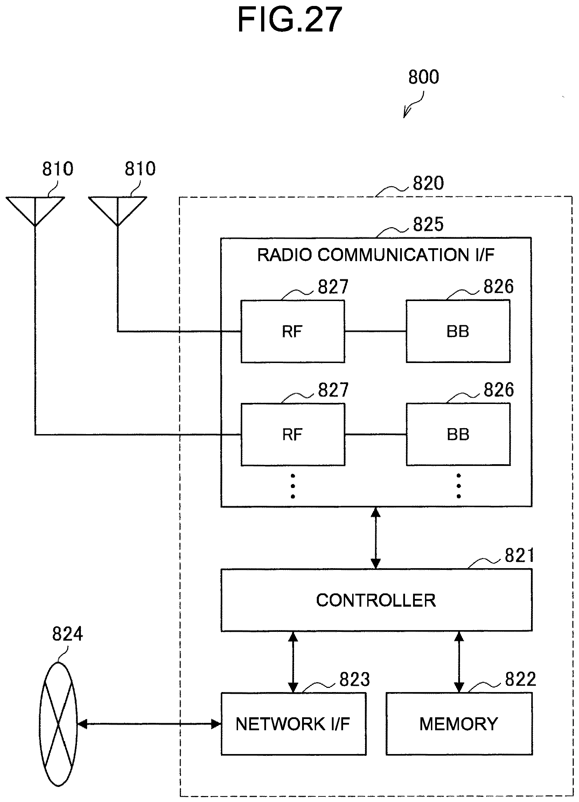

FIG. 27 is a block diagram illustrating a first example of a schematic configuration of an eNB to which the technology according to the present disclosure is applicable. An eNB 800 has one or more antennas 810 and a base station device 820. Each of the antennas 810 and the base station device 820 may be connected to each other via an RF cable.

Each of the antennas 810 has a single or a plurality of antenna elements (for example, a plurality of antenna elements constituting a MIMO antenna) and is used for transmission and reception of radio signals by the base station device 820. The eNB 800 has a plurality of antennas 810 as illustrated in FIG. 27, and the plurality of antennas 810 may correspond to a plurality of frequency bands used by the eNB 800, respectively, for example. Although FIG. 27 illustrates an example in which the eNB 800 has the plurality of antennas 810, the eNB 800 may have a single antenna 810.

The base station device 820 includes a controller 821, memory 822, a network interface 823, and a radio communication interface 825.

The controller 821 may be a CPU or DSP, for example, and controls operation of various functions of a higher layer of the base station device 820. For example, the controller 821 generates a data packet from the data in the signal processed by the radio communication interface 825 and transfers the generated packet via the network interface 823. The controller 821 may generate a bundled packet by bundling data from a plurality of baseband processors and transfer the generated bundled packet. In addition, the controller 821 may include logical functions that execute controls such as radio resource control, radio bearer control, mobility management, admission control, or scheduling. Furthermore, the control may be executed in cooperation with surrounding eNBs or a core network nodes. The memory 822 includes RAM and ROM, and stores a program executed by the controller 821 and various types of control data (for example, terminal list, transmission power data, and scheduling data)

The network interface 823 is a communication interface for connecting the base station device 820 to a core network 824. The controller 821 may communicate with a core network node or other eNBs via the network interface 823. In that case, the eNB 800 may be connected to the core network node or other eNB to each other by a logical interface (for example, an S1 interface or an X2 interface). The network interface 823 may be a wired communication interface or a radio communication interface for a radio backhaul. When the network interface 823 is a radio communication interface, the network interface 823 may use a frequency band higher than the frequency band used by the radio communication interface 825, for radio communication.

The radio communication interface 825 supports a cellular communication scheme such as Long Term Evolution (LTE) or LTE-Advanced, and provides a radio connection to terminals located in the cell of the eNB 800 via the antenna 810. The radio communication interface 825 can typically include a baseband (BB) processor 826, RF circuit 827, or the like. The BB processor 826 may perform, for example, coding/decoding, modulation/demodulation, and multiplexing/demultiplexing, and executes various types of signal processing in individual layers (for example, L1, Medium Access Control (MAC), Radio Link Control (RLC), and Packet Data Convergence Protocol (PDCP)). The BB processor 826 may include some or all of the above-described logical functions instead of the controller 821. The BB processor 826 may be a module including: memory for storing a communication control program; a processor for executing the program; and related circuits. The functions of the BB processor 826 may be modified by updating the above program. Furthermore, the module may be a card or a blade inserted into a slot of the base station device 820, or may be a chip mounted on the card or the blade. The RF circuit 827 may include a mixer, a filter, an amplifier, or the like, and transmits and receives radio signals via the antenna 810.

The radio communication interface 825 may include a plurality of BB processors 826 as illustrated in FIG. 27, and the plurality of BB processors 826 may correspond to a plurality of frequency bands used by the eNB 800, respectively, for example. Furthermore, the radio communication interface 825 may include a plurality of RF circuits 827 as illustrated in FIG. 27, and the plurality of RF circuits 827 may correspond to a plurality of antenna elements, respectively, for example. Although FIG. 27 illustrates an example in which the radio communication interface 825 includes a plurality of BB processors 826 and a plurality of RF circuits 827, the radio communication interface 825 may include a single BB processor 826 or a single RF circuit 827.

In the eNB 800 illustrated in FIG. 27, one or more components (the setting unit 151 and/or the measurement unit 153) included in the control unit 150 described with reference to FIG. 10 may be implemented in the radio communication interface 825. Alternatively, at least part of these components may be implemented in the controller 821. As an example, the eNB 800 is equipped with a module including part or all of the radio communication interface 825 (for example, the BB processor 826) and/or the controller 821, and the module may be equipped with one or more of the above components. In this case, the module may store a program for causing the processor to function as the one or more components (in other words, a program for causing the processor to perform the operation of the one or more components) and may execute the program. As another example, the program causing the processor to function as the one or more of the above components may be installed in the eNB 800, and the radio communication interface 825 (for example, the BB processor 826) and/or the controller 821 may execute the program. As described above, the eNB 800, the base station device 820, or the above module may be provided as a device including the one or more components, and a program for causing the processor to function as the one or more components may be provided. Furthermore, a readable recording medium on which the above program is recorded may be provided.

Furthermore, in the eNB 800 illustrated in FIG. 27, the radio communication unit 120 described with reference to FIG. 10 may be implemented in the radio communication interface 825 (for example, RF circuit 827). Furthermore, the antenna unit 110 may be implemented in the antenna 810. Furthermore, the network communication unit 130 may be implemented in the controller 821 and/or the network interface 823. Furthermore, the storage unit 140 may be implemented in the memory 822.

### (Second application example)

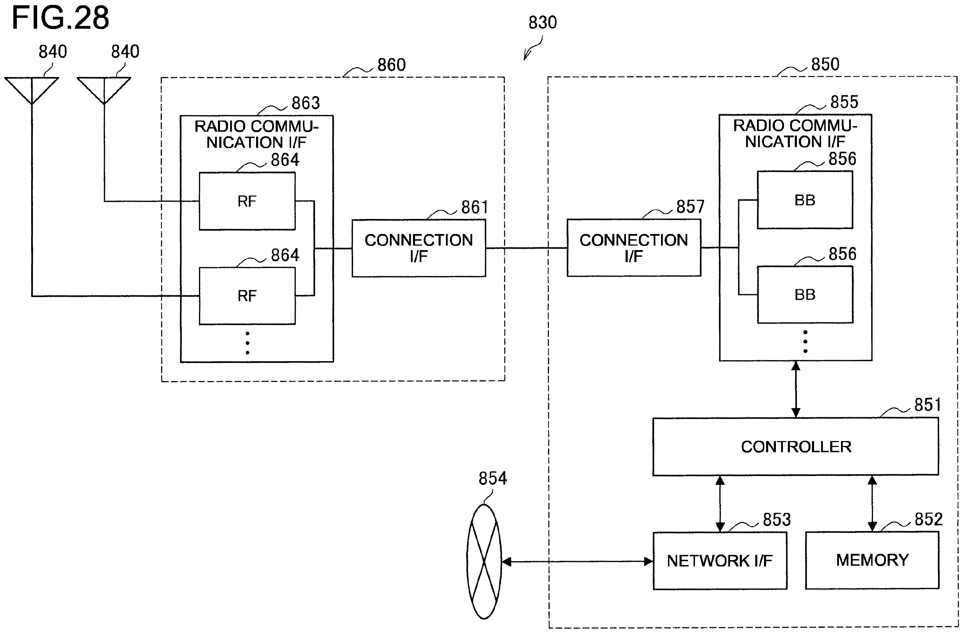

FIG. 28 is a block diagram illustrating a second example of a schematic configuration of an eNB to which the technology according to the present disclosure is applicable. An eNB 830 has one or more antennas 840, a base station device 850, and an RRH 860. Each of the antennas 840 and the RRH 860 can be connected to each other via an RF cable. Furthermore, the base station device 850 and the RRH 860 can be connected to each other by a high-speed line such as an optical fiber cable.

Each of the antennas 840 has a single or a plurality of antenna elements (for example, a plurality of antenna elements constituting a MIMO antenna) and is used for transmission and reception of radio signals by the RRH 860. The eNB 830 has a plurality of antennas 840 as illustrated in FIG. 28, and the plurality of antennas 840 may correspond to a plurality of frequency bands used by the eNB 830, respectively, for example. Although FIG. 28 illustrates an example in which the eNB 830 has the plurality of antennas 840, the eNB 830 may have a single antenna 840.

The base station device 850 includes a controller 851, memory 852, a network interface 853, a radio communication interface 855, and a connection interface 857. The controller 851, the memory 852, and the network interface 853 are similar to the controller 821, memory 822, and network interface 823 described with reference to FIG. 27, respectively.

The radio communication interface 855 supports a cellular communication scheme such as LTE or LTE-Advanced, and provides a radio connection to terminals located in the sector corresponding to the RRH 860 via the RRH 860 and the antenna 840. The radio communication interface 855 can typically include a BB processor 856 or the like. The BB processor 856 is similar to the BB processor 826 described with reference to FIG. 27, except that connection to an RF circuit 864 of the RRH 860 is made via the connection interface 857. The radio communication interface 855 may include a plurality of BB processors 856 as illustrated in FIG. 28, and the plurality of BB processors 856 may correspond to a plurality of frequency bands used by the eNB 830, respectively, for example. Although FIG. 28 illustrates an example in which the radio communication interface 855 includes a plurality of BB processors 856, the radio communication interface 855 may include a single BB processor 856.

The connection interface 857 is an interface for connecting the base station device 850 (radio communication interface 855) to the RRH 860. The connection interface 857 may be a communication module for communication over the high-speed line connecting the base station device 850 (radio communication interface 855) and the RRH 860.

The RRH 860 also includes a connection interface 861 and a radio communication interface 863.

The connection interface 861 is an interface for connecting the RRH 860 (radio communication interface 863) to the base station device 850. The connection interface 861 may be a communication module for communication over the high-speed line.

The radio communication interface 863 transmits and receives radio signals via the antenna 840. The radio communication interface 863 can typically include the RF circuit 864 or the like. The RF circuit 864 may include a mixer, a filter, an amplifier, or the like, and transmits and receives radio signals via the antenna 840. The radio communication interface 863 includes a plurality of RF circuits 864 as illustrated in FIG. 28, and the plurality of RF circuits 864 may correspond to a plurality of antenna elements, respectively, for example. Although FIG. 28 illustrates an example in which the radio communication interface 863 includes a plurality of RF circuits 864, the radio communication interface 863 may include a single RF circuit 864.

In the eNB 830 illustrated in FIG. 28, one or more components (the setting unit 151 and/or the measurement unit 153) included in the control unit 150 described with reference to FIG. 10 may be implemented in the radio communication interface 855 and/or the radio communication interface 863. Alternatively, at least part of these components may be implemented in the controller 851. As an example, the eNB 830 may be equipped with a module including a part or all of the radio communication interface 855 (for example, the BB processor 856) and/or the controller 851, and the module may be equipped with one or more of the above components. In this case, the module may store a program for causing the processor to function as the one or more components (in other words, a program for causing the processor to perform the operation of the one or more components) and may execute the program. As another example, the program causing the processor to function as the one or more of the above components may be installed in the eNB 830, and the radio communication interface 855 (for example, the BB processor 856) and/or the controller 851 may execute the program. As described above, the eNB 830, the base station device 850, or the above module may be provided as a device including the one or more components, and a program for causing the processor to function as the one or more components may be provided. Furthermore, a readable recording medium on which the above program is recorded may be provided.

Furthermore, in the eNB 830 illustrated in FIG. 28, the radio communication unit 120 described with reference to FIG. 10, for example, may be implemented in the radio communication interface 863 (for example, RF circuit 864). Furthermore, the antenna unit 110 may be implemented in the antenna 840. Furthermore, the network communication unit 130 may be implemented in the controller 851 and/or the network interface 853. Furthermore, the storage unit 140 may be implemented in the memory 852.

### <<5.2. Application examples related to terminal device>>

### (First application example)

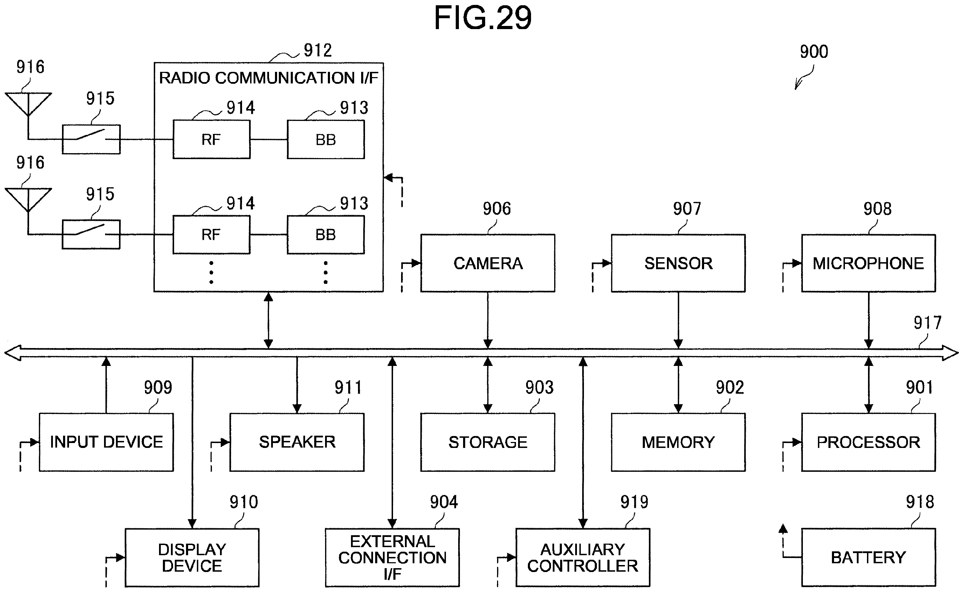

FIG. 29 is a block diagram illustrating an example of a schematic configuration of a smartphone 900 to which the technology according to the present disclosure can be applied. The smartphone 900 includes a processor 901, memory 902, storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be a CPU or a System on Chip (SoC), for example, and controls the functions of the application layer and other layers of the smartphone 900. The memory 902 includes RAM and ROM and stores programs to be executed by the processor 901, and data. The storage 903 may include a storage medium such as semiconductor memory or a hard disk. The external connection interface 904 is an interface for connecting an external device such as a memory card or a Universal Serial Bus (USB) device to the smartphone 900.

The camera 906 includes an imaging element such as a Charge Coupled Device (CCD) or a Complementary Metal Oxide Semiconductor (CMOS), and generates a captured image. Examples of the sensor 907 can include a group of sensors such as a positioning sensor, a gyro sensor, a geomagnetic sensor, and an acceleration sensor. The microphone 908 converts the voice input to the smartphone 900 into a voice signal. The input device 909 includes a touch sensor that detects a touch on the screen of the display device 910, a keypad, a keyboard, a button, or a switch and receives an input of operation or information from the user. The display device 910 has a screen such as a liquid crystal display (LCD) or an organic light emitting diode (OLED) display, and displays an output image of the smartphone 900. The speaker 911 converts the voice signal output from the smartphone 900 into voice.

The radio communication interface 912 supports a cellular communication scheme such as LTE or LTE-Advanced and executes radio communication. The radio communication interface 912 can typically include a BB processor 913, an RF circuit 914, or the like. The BB processor 913 may perform, for example, encoding/decoding, modulation/demodulation, and multiplexing/demultiplexing, and performs various signal processing for radio communication. The RF circuit 914 may include a mixer, a filter, an amplifier, or the like, and transmits and receives radio signals via the antenna 916. The radio communication interface 912 may be a one-chip module integrating the BB processor 913 and the RF circuit 914. The radio communication interface 912 may include a plurality of BB processors 913 and a plurality of RF circuits 914 as illustrated in FIG. 29. Although FIG. 29 illustrates an example in which the radio communication interface 912 includes a plurality of BB processors 913 and a plurality of RF circuits 914, the radio communication interface 912 may include a single BB processor 913 or a single RF circuit 914.

Furthermore, the radio communication interface 912 may support other types of radio communication scheme such as short-range radio communication scheme, near field radio communication scheme, or wireless Local Area Network (LAN) scheme in addition to the cellular communication scheme. In that case, the radio communication interface 912 may include the BB processor 913 and the RF circuit 914 for each of the radio communication schemes.

Each of the antenna switches 915 switches the connection destination of the antenna 916 between a plurality of circuits included in the radio communication interface 912 (for example, circuits for different radio communication schemes).

Each of the antennas 916 has a single or a plurality of antenna elements (for example, a plurality of antenna elements constituting a MIMO antenna) and is used for transmitting and receiving radio signals by the radio communication interface 912. The smartphone 900 may have a plurality of antennas 916 as illustrated in FIG. 29. Although FIG. 29 illustrates an example in which the smartphone 900 has the plurality of antennas 916, the smartphone 900 may have a single antenna 916.

Furthermore, the smartphone 900 may be provided with an antenna 916 for each of the radio communication schemes. In that case, the antenna switch 915 may be omitted from the configuration of the smartphone 900.

Bus 917 provides mutual connection between the processor 901, the memory 902, the storage 903, the external connection interface 904, the camera 906, the sensor 907, the microphone 908, the input device 909, the display device 910, the speaker 911, the radio communication interface 912, and the auxiliary controller 919. The battery 918 supplies power to individual blocks of the smartphone 900 illustrated in FIG. 29 via the power supply lines partially illustrated by the broken lines in the figure. The auxiliary controller 919 controls operation of minimum necessary functions of the smartphone 900 during a sleep mode, for example.

In the smartphone 900 illustrated in FIG. 29, one or more components (the reporting unit 241 and/or the antenna control unit 243) included in the control unit 240 described with reference to FIG. 11 may be implemented in the radio communication interface 912. Alternatively, at least part of these components may be implemented in the processor 901 or the auxiliary controller 919. As an example, the smartphone 900 may be equipped with a module including a part (for example, BB processor 913) or all of the radio communication interface 912, the processor 901, and/or the auxiliary controller 919, and may be equipped with one or more of the above-described components in the module. In this case, the module may store a program for causing the processor to function as the one or more components (in other words, a program for causing the processor to perform the operation of the one or more components) and may execute the program. As another example, the program causing the processor to function as the one or more of the above components may be installed in the smartphone 900, and the radio communication interface 912 (for example, the BB processor 913), the processor 901, and/or the auxiliary controller 919 may execute the program. As described above, the smartphone 900 or the above module may be provided as a device including the one or more components, and a program for causing the processor to function as the one or more components may be provided. Furthermore, a readable recording medium on which the above program is recorded may be provided.

Furthermore, in the smartphone 900 illustrated in FIG. 29, for example, the radio communication unit 220 described with reference to FIG. 11 may be implemented in the radio communication interface 912 (for example, RF circuit 914). Furthermore, the antenna unit 210 may be implemented in the antenna 916. Furthermore, the storage unit 230 may be implemented in the memory 902.

### (Second application example)

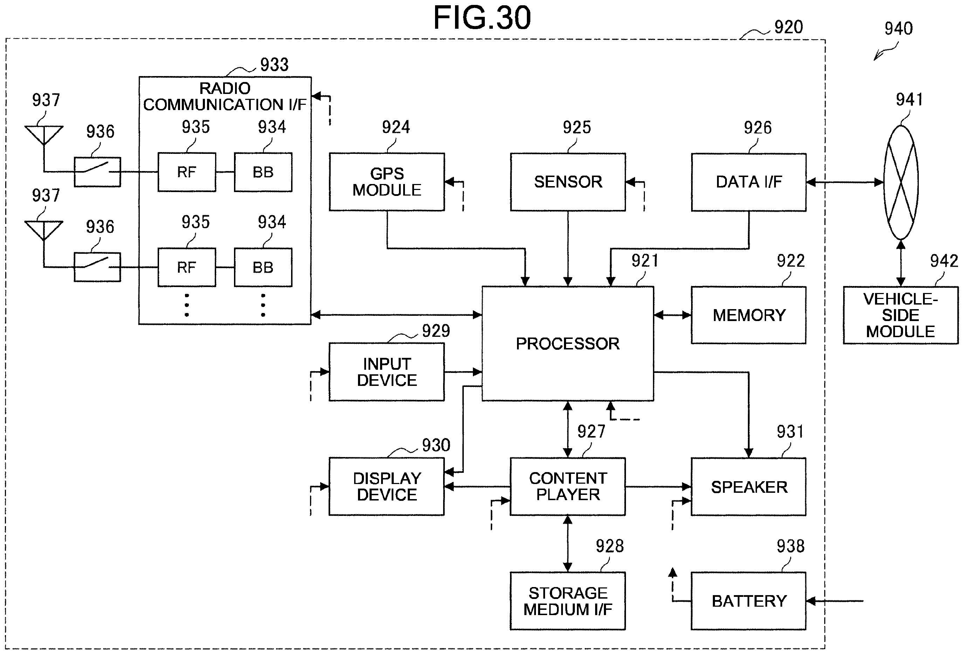

FIG. 30 is a block diagram illustrating an example of a schematic configuration of a car navigator 920 to which the technology according to the present disclosure is applicable. The car navigator 920 includes a processor 921, memory 922, a Global Positioning System (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be a CPU or SoC, for example, and controls the navigation function and other functions of the car navigator 920. The memory 922 includes RAM and ROM and stores programs to be executed by the processor 921, and data.

The GPS module 924 measures the position (including latitude, longitude, and altitude) of the car navigator 920 using GPS signals received from GPS satellites. The sensor 925 can include a group of sensors such as a gyro sensor, a geomagnetic sensor, and a barometric pressure sensor, for example. The data interface 926 is connected to an in-vehicle network 941 via a terminal (not illustrated), for example, and acquires data generated on the vehicle side such as vehicle speed data.

The content player 927 plays pieces of content stored on a storage medium (for example, a CD or DVD) inserted into the storage medium interface 928. The input device 929 includes a touch sensor that detects a touch on the screen of the display device 930, a button, or a switch and receives an input of operation or information from the user. The display device 930 includes a screen such as an LCD or OLED display and displays an image of a navigation function or a content to be played. The speaker 931 outputs the sound of the navigation function or the content to be played.

The radio communication interface 933 supports a cellular communication scheme such as LTE or LTE-Advanced and executes radio communication. The radio communication interface 933 can typically include a BB processor 934, an RF circuit 935, or the like. The BB processor 934 may perform, for example, encoding/decoding, modulation/demodulation, and multiplexing/demultiplexing, and performs various signal processing for radio communication. The RF circuit 935 may include a mixer, a filter, an amplifier, or the like, and transmits and receives radio signals via the antenna 937. The radio communication interface 933 may be a one-chip module integrating the BB processor 934 and the RF circuit 935. The radio communication interface 933 may include a plurality of BB processors 934 and a plurality of RF circuits 935 as illustrated in FIG. 30. Although FIG. 30 illustrates an example in which the radio communication interface 933 includes a plurality of BB processors 934 and a plurality of RF circuits 935, the radio communication interface 933 may include a single BB processor 934 or a single RF circuit 935.

Furthermore, the radio communication interface 933 may support other types of radio communication schemes such as short-range radio communication scheme, near field radio communication scheme, or a wireless LAN scheme in addition to the cellular communication scheme. In that case, the radio communication interface 933 may include the BB processor 934 and the RF circuit 935 for each of the radio communication schemes.

Each of the antenna switches 936 switches the connection destination of the antenna 937 between a plurality of circuits included in the radio communication interface 933 (for example, circuits for different radio communication schemes).

Each of the antennas 937 has a single or a plurality of antenna elements (for example, a plurality of antenna elements constituting a MIMO antenna) and is used for transmitting and receiving radio signals by the radio communication interface 933. The car navigator 920 may have a plurality of antennas 937 as illustrated in FIG. 30. Although FIG. 30 illustrates an example in which the car navigator 920 has a plurality of antennas 937, the car navigator 920 may have a single antenna 937.

Furthermore, the car navigator 920 may include the antenna 937 for each of the radio communication schemes. In that case, the antenna switch 936 may be omitted from the configuration of the car navigator 920.

The battery 938 supplies power to individual blocks of the car navigator 920 illustrated in FIG. 30 via the power supply lines partially illustrated by the broken lines in the figure. In addition, the battery 938 stores electric power supplied from the vehicle side.

In the car navigator 920 illustrated in FIG. 30, one or more components (the reporting unit 241 and/or the antenna control unit 243) included in the control unit 240 described with reference to FIG. 11 may be implemented in the radio communication interface 933. Alternatively, at least part of these components may be implemented in the processor 921. As an example, the car navigator 920 may be equipped with a module including a part (for example, BB processor 934) or all of the radio communication interface 933 and/or the processor 921, and the module may be equipped with one or more of the above components. In this case, the module may store a program for causing the processor to function as the one or more components (in other words, a program for causing the processor to perform the operation of the one or more components) and may execute the program. As another example, a program causing the processor to function as one or more of the above components may be installed in the car navigator 920, and the radio communication interface 933 (for example, the BB processor 934) and/or the processor 921 may execute the program. As described above, the car navigator 920 or the above module may be provided as a device including the one or more components, and a program for causing the processor to function as the one or more components may be provided. Furthermore, a readable recording medium on which the above program is recorded may be provided.

Furthermore, in the car navigator 920 illustrated in FIG. 30, the radio communication unit 220 described with reference to FIG. 11, for example, may be implemented in the radio communication interface 933 (for example, RF circuit 935). Furthermore, the antenna unit 210 may be implemented in the antenna 937. Furthermore, the storage unit 230 may be implemented in the memory 922.

Furthermore, the technique according to the present disclosure may be actualized as an in-vehicle system (or vehicle) 940 including one or more blocks of the car navigator 920 described above, the in-vehicle network 941, and a vehicle-side module 942. The vehicle-side module 942 generates vehicle-side data such as vehicle speed, engine speed, or failure information, and outputs the generated data to the in-vehicle network 941.

### <<6. Summary>>

The preferred embodiments of the present disclosure have been described in detail above with reference to the accompanying drawings. However, the technical scope of the present disclosure is not limited to such examples. It will be apparent to those skilled in the art of the present disclosure that various modifications and alterations can be conceived within the scope of the technical idea described in the claims and naturally fall within the technical scope of the present disclosure.

For example, although the above embodiment is an example of the antenna switching for each BWP, the present technology is not limited to such an example. For example, antenna switching may be performed for each CC.

Furthermore, the processing described using the sequence diagram in the present specification do not necessarily have to be executed in the illustrated order. Some processing steps may be performed in parallel. In addition, additional processing steps may be employed, and some processing steps may be omitted.

Furthermore, the effects described in the present specification are merely illustrative or exemplary and are not limited. That is, the technology according to the present disclosure can exhibit other effects that are apparent to those skilled in the art from the description of the present specification in addition to or instead of the above effects.

Note that the following configurations also belong to the technical scope of the present disclosure.
(1) A communication device comprising:
   a plurality of antenna panels, each of the antenna panels including one or more antennas, one or more transmission processing units for signal transmission using the antennas, and one or more reception processing units for signal reception using the antennas; and
   a control unit that performs antenna switching when the communication device has received a notification including information regarding a reference signal of downlink from a second communication device, the antenna switching being an operation of switching connection between the antenna included in the antenna panel that has received the reference signal and the transmission processing unit.
(2) The communication device according to (1), wherein the control unit reports, to the second communication device, information regarding the antenna panel used for the reception of the reference signal.
(3) The communication device according to (1) or (2), wherein the control unit performs signal transmission in accordance with an instruction from the second communication device, the signal transmission performed by using a resource arrangement in which a time resource to be used at implementation of the antenna switching of a first antenna panel is arranged between a plurality of time resources to be used at implementation of the antenna switching of a second antenna panel.
(4) The communication device according to (3), wherein the control unit uses the resource arrangement in a case where the number of the transmission processing units and the number of the reception processing units included in the first antenna panel are respectively the same as the number of the transmission processing units and the number of the reception processing units included in the second antenna panel.
(5) The communication device according to (3) or (4), wherein the control unit uses the resource arrangement in a case where the first antenna panel used to receive a first reference signal is different from the second antenna panel used to receive a second reference signal.
(6) The communication device according to any one of (1) to (5), wherein the control unit transmits a notification indicating whether there is capability to perform the antenna switching with a plurality of the second communication devices.
(7) The communication device according to any one of (1) to (6), wherein the control unit receives, from the second communication device, a notification designating an antenna switching mode including information regarding the number of the transmission processing units and the number of the reception processing units of the antenna panel, and performs the antenna switching using the antenna panel corresponding to the antenna switching mode.
(8) The communication device according to (7), wherein the control unit transmits mode information to the second communication device, the mode information being information regarding the antenna switching mode that can be implemented.
(9) The communication device according to (8), wherein, when the antenna switching mode not included in the mode information is designated, the control unit transmits implementation information to the second communication device, the implementation information being information indicating whether the antenna switching can be implemented.
(10) The communication device according to (8) or (9), wherein, when the antenna switching mode not included in the mode information is designated, the control unit performs the antenna switching on the antenna panel including a smaller number of the transmission processing units or the reception processing units than at least one of the number of the transmission processing units or the number of the reception processing units included in the antenna switching mode.
(11) A communication device comprising a control unit that transmits a notification including information regarding a downlink reference signal to a second communication device, the second communication device including a plurality of antenna panels, each of the antenna panels including one or more antennas, one or more transmission processing units for signal transmission using the antennas, and one or more reception processing units for signal reception using the antennas, the transmission of the notification performed so as to designate the antenna panel as a target of antenna switching, the antenna switching being an operation of switching a connection between the antennas and the transmission processing units, the designation of the antenna panel performed at a time of signal transmission by the second communication device.
(12) A communication control method to be applied to a communication device,
   the communication device including a plurality of antenna panels, each of the antenna panels including one or more antennas, one or more transmission processing units for signal transmission using the antennas, and one or more reception processing units for signal reception using the antennas,
   the communication control method comprising
   performing, by using a processor, antenna switching when the communication device has received a notification including information regarding a reference signal of downlink from a second communication device, the antenna switching being an operation of switching a connection between the antenna included in the antenna panel that has received the reference signal and the transmission processing unit.
(13) A communication control method comprising transmitting a notification including information regarding a downlink reference signal to a second communication device, the second communication device including a plurality of antenna panels, each of the antenna panels including one or more antennas, one or more transmission processing units for signal transmission using the antennas, and one or more reception processing units for signal reception using the antennas, the transmission of the notification performed so as to designate, by using a processor, the antenna panel as a target of antenna switching, the antenna switching being an operation of switching a connection between the antennas and the transmission processing units, the designation of the antenna panel performed at a time of signal transmission by the second communication device.
(14) A communication system comprising a first communication device and a second communication device,
   wherein the first communication device includes:
   a plurality of antenna panels, each of the antenna panels including one or more antennas, one or more transmission processing units for signal transmission using the antennas, and one or more reception processing units for signal reception using the antennas; and
   a control unit that performs antenna switching when the first communication device has received a notification including information regarding a reference signal of downlink from a second communication device, the antenna switching being an operation of switching a connection between the antenna included in the antenna panel that has received the reference signal and the transmission processing unit, and
   the second communication device includes
   a control unit that transmits, to the first communication device, the notification including the information regarding the reference signal, the transmission of the notification is performed so as to designate, by using a processor, the antenna panel as a target of antenna switching, the designation of the antenna panel performed at a time of signal transmission by the first communication device.

### Reference Signs List

- 11: CELL
- 20: CORE NETWORK
- 30: PDN
- 40: BEAM GROUP
- 100: BASE STATION
- 200: TERMINAL DEVICE
- 50: ANTENNA SET
- 51: ANTENNA
- 52: TRANSMISSION/RECEPTION CHANGEOVER SWITCH
- 53: ANTENNA ELEMENT CHANGEOVER SWITCH
- 54: TRANSMISSION ANALOG CIRCUIT (EXAMPLE OF TRANSMISSION PROCESSING UNIT)
- 55: RECEPTION ANALOG CIRCUIT (EXAMPLE OF RECEPTION PROCESSING UNIT)
- 110,: 210 ANTENNA UNIT
- 120,: 220 RADIO COMMUNICATION UNIT
- 130: NETWORK COMMUNICATION UNIT
- 140,: 230 STORAGE UNIT
- 150,: 240 CONTROL UNIT
- 151: SETTING UNIT
- 153: MEASUREMENT UNIT
- 241: REPORTING UNIT
- 243: ANTENNA CONTROL UNIT
- 60: ANTENNA PANEL

## Claims

1. A communication device comprising:
a plurality of antenna panels, each of the antenna panels including one or more antennas, one or more transmission processing units for signal transmission using the antennas, and one or more reception processing units for signal reception using the antennas; and
a control unit that performs antenna switching when the communication device has received a notification including information regarding a reference signal of downlink from a second communication device, the antenna switching being an operation of switching connection between the antenna included in the antenna panel that has received the reference signal and the transmission processing unit.

2. The communication device according to claim 1, wherein the control unit reports, to the second communication device, information regarding the antenna panel used for the reception of the reference signal.

3. The communication device according to claim 1, wherein the control unit performs signal transmission in accordance with an instruction from the second communication device, the signal transmission performed by using a resource arrangement in which a time resource to be used at implementation of the antenna switching of a first antenna panel is arranged between a plurality of time resources to be used at implementation of the antenna switching of a second antenna panel.

4. The communication device according to claim 3, wherein the control unit uses the resource arrangement in a case where the number of the transmission processing units and the number of the reception processing units included in the first antenna panel are respectively the same as the number of the transmission processing units and the number of the reception processing units included in the second antenna panel.

5. The communication device according to claim 3, wherein the control unit uses the resource arrangement in a case where the first antenna panel used to receive a first reference signal is different from the second antenna panel used to receive a second reference signal.

6. The communication device according to claim 1, wherein the control unit transmits a notification indicating whether there is capability to perform the antenna switching with a plurality of the second communication devices.

7. The communication device according to claim 1, wherein the control unit receives, from the second communication device, a notification designating an antenna switching mode including information regarding the number of the transmission processing units and the number of the reception processing units of the antenna panel, and performs the antenna switching using the antenna panel corresponding to the antenna switching mode.

8. The communication device according to claim 7, wherein the control unit transmits mode information to the second communication device, the mode information being information regarding the antenna switching mode that can be implemented.

9. The communication device according to claim 8, wherein, when the antenna switching mode not included in the mode information is designated, the control unit transmits implementation information to the second communication device, the implementation information being information indicating whether the antenna switching can be implemented.

10. The communication device according to claim 8, wherein, when the antenna switching mode not included in the mode information is designated, the control unit performs the antenna switching on the antenna panel including a smaller number of the transmission processing units or the reception processing units than at least one of the number of the transmission processing units or the number of the reception processing units included in the antenna switching mode.

11. A communication device comprising a control unit that transmits a notification including information regarding a downlink reference signal to a second communication device, the second communication device including a plurality of antenna panels, each of the antenna panels including one or more antennas, one or more transmission processing units for signal transmission using the antennas, and one or more reception processing units for signal reception using the antennas, the transmission of the notification performed so as to designate the antenna panel as a target of antenna switching, the antenna switching being an operation of switching a connection between the antennas and the transmission processing units, the designation of the antenna panel performed at a time of signal transmission by the second communication device.

12. A communication control method to be applied to a communication device,
the communication device including a plurality of antenna panels, each of the antenna panels including one or more antennas, one or more transmission processing units for signal transmission using the antennas, and one or more reception processing units for signal reception using the antennas,
the communication control method comprising
performing, by using a processor, antenna switching when the communication device has received a notification including information regarding a reference signal of downlink from a second communication device, the antenna switching being an operation of switching a connection between the antenna included in the antenna panel that has received the reference signal and the transmission processing unit.

13. A communication control method comprising transmitting a notification including information regarding a downlink reference signal to a second communication device, the second communication device including a plurality of antenna panels, each of the antenna panels including one or more antennas, one or more transmission processing units for signal transmission using the antennas, and one or more reception processing units for signal reception using the antennas, the transmission of the notification performed so as to designate, by using a processor, the antenna panel as a target of antenna switching, the antenna switching being an operation of switching a connection between the antennas and the transmission processing units, the designation of the antenna panel performed at a time of signal transmission by the second communication device.

14. A communication system comprising a first communication device and a second communication device,
wherein the first communication device includes:
a plurality of antenna panels, each of the antenna panels including one or more antennas, one or more transmission processing units for signal transmission using the antennas, and one or more reception processing units for signal reception using the antennas; and
a control unit that performs antenna switching when the first communication device has received a notification including information regarding a reference signal of downlink from a second communication device, the antenna switching being an operation of switching a connection between the antenna included in the antenna panel that has received the reference signal and the transmission processing unit, and
the second communication device includes
a control unit that transmits, to the first communication device, the notification including the information regarding the reference signal, the transmission of the notification is performed so as to designate, by using a processor, the antenna panel as a target of antenna switching, the designation of the antenna panel performed at a time of signal transmission by the first communication device.
